# EUROPÄISCHE PATENTSCHRIFT

(11) **EP 3 240 152 B1**
(45) Veröffentlichungstag und Bekanntmachung des Hinweises auf die Patenterteilung: **19.02.2020**
(21) Anmeldenummer: 17166105.1
(22) Anmeldetag: 11.04.2017
(51) Int. Cl.: F02B 37/18, F02M 26/54, F02M 26/73, H02K 5/20, F02B 39/00

(54) **STELLVORRICHTUNG**
ACTUATING DEVICE
SYSTÈME DE MANOEUVRE

(30) Priorität: 25.04.2016 DE 102016206954
(43) Veröffentlichungstag der Anmeldung: 01.11.2017
(73) Patentinhaber: Mahle International GmbH, 70376 Stuttgart (DE)
(72) Erfinder: MAKAROW, Eugen, 71636 Ludwigsburg (DE); SALFELD, Edgar, 73669 Lichtenwald (DE); VAN EICKELS, Bernd, 73733 Esslingen (DE); WETZEL, Florian, 73666 Baltmannsweiler (DE)
(74) Vertreter: BRP Renaud & Partner mbB Rechtsanwälte Patentanwälte Steuerberater

(56) Entgegenhaltungen:
- DE-A1-102013 109 294
- DE-A1-102014 106 517
- DE-C2- 3 729 574
- DE-T2- 69 508 153

## Beschreibung

Die vorliegende Erfindung betrifft eine Stellvorrichtung zum mechanischen Betätigen einer Komponente einer Maschine, mit den Merkmalen des Oberbegriffs des Anspruchs 1. Die Erfindung betrifft insbesondere einen Abgasturbolader, der mit einer solchen Stellvorrichtung ausgestattet ist.

Bei einer Vielzahl von Maschinen gibt es Komponenten, die mechanisch betätigt werden müssen, damit die jeweilige Komponente die ihr zugeordnete Funktion innerhalb der jeweiligen Maschine erfüllen kann. Von bevorzugtem Interesse ist als Maschine hierbei ein Abgasturbolader, der als betätigbare Komponente beispielsweise eine variable Turbinengeometrie oder ein Wastegateventil aufweisen kann. Dementsprechend kann ein derartiger Abgasturbolader mit einer Stellvorrichtung ausgestattet sein, um die variable Turbinengeometrie bzw. das Wastegateventil bedarfsabhängig zu betätigen. Selbstverständlich lassen sich auch andere Maschinen mit derartigen Stellvorrichtungen ausstatten. Beispielsweise kann eine Pumpe eine solche Maschine repräsentieren, die als betätigbare Komponente ein Ventil zum Einstellen eines Volumenstroms aufweist. Mit Hilfe der Stellvorrichtung lässt sich dann das Ventil betätigen. Ebenso ist denkbar, eine Abgasrückführung als Maschine aufzufassen, die als betätigbare Komponente ein Abgasrückführventil zum Einstellen einer Abgasrückführrate aufweist. Auch diese Maschine kann mit einer Stellvorrichtung zum Betätigen des Abgasrückführventils ausgestattet sein.

Stellvorrichtungen, die sich zum mechanischen Betätigen einer Komponente einer Maschine eignen, umfassen grundsätzlich ein Gehäuse und einen im Gehäuse angeordneten Elektromotor zum Antreiben eines außen am Gehäuse angeordneten Stellglieds, das zum Koppeln mit der jeweiligen, zu betätigenden Komponente vorgesehen ist. Elektromotoren zeichnen sich durch ihre hohe Zuverlässigkeit aus. Im Gehäuse können weitere Bauteile der Stellvorrichtung angeordnet sein, wie beispielsweise ein Getriebe, das antriebsmäßig zwischen einer Antriebswelle des Elektromotors und dem jeweiligen Stellglied angeordnet ist. Ebenso kann im Gehäuse eine Sensorik zum Erkennen einer aktuellen Position oder Drehlage des Stellglieds relativ zum Gehäuse angeordnet sein.

Je nach Anwendungsfall kann eine derartige Stellvorrichtung relativ hohen Umgebungstemperaturen ausgesetzt sein. Bekanntermaßen hängt die Lebensdauer elektrischer und elektronischer Bauteile stark von der Betriebstemperatur ab; je höher die Betriebstemperatur, desto kürzer die Lebensdauer. Bei einer Stellvorrichtung mit Elektromotor kommt erschwerend hinzu, dass der Elektromotor während seines Betriebs selbst Wärme erzeugt.

Die Stellvorrichtung ist für eine Montage an der jeweiligen Maschine vorgesehen, deren Komponente mit der Stellvorrichtung betätigt werden soll. Es ist daher zweckmäßig, am Gehäuse einer derartigen Stellvorrichtung zum einen erste bzw. primäre Befestigungsstellen oder Befestigungsmittel oder Befestigungseinrichtungen vorzusehen, mit denen das Gehäuse bzw. die Stellvorrichtung an der jeweiligen Maschine befestigt werden kann.

Zur Qualitätssicherung kann vorgesehen sein, die Stellvorrichtung vor ihrer Montage an der jeweiligen Maschine im Hinblick auf ihre ordnungsgemäße Funktion zu überprüfen. Bei einem mehrteiligen Gehäuse ist es dabei von Vorteil, wenn die separaten Gehäuseteile für diese Funktionsüberprüfung bereits aneinander befestigt sind. Die Befestigung der Gehäuseteile aneinander im Rahmen der Montage der Stellvorrichtung erleichtert auch die Logistik, nämlich die Lagerhaltung und den Transport, beispielsweise vom Ort der Herstellung zum Ort der Funktionsüberprüfung sowie vom Ort der Funktionsüberprüfung zum Ort der Montage an der jeweiligen Maschine. Dementsprechend können zusätzlich zu den vorstehend genannten primären Befestigungsstellen zweite bzw. sekundäre Befestigungsstellen oder Befestigungsmittel oder Befestigungseinrichtungen vorgesehen sein, die es ermöglichen, die Gehäuseteile aneinander zu befestigen. Problematisch ist dabei der hierzu erforderliche Aufwand im Rahmen der Herstellung der Stellvorrichtung. Werden nämlich zum Beispiel Schraubverbindungen für die primären und sekundären Befestigungsstellen verwendet, müssen für die primären und für die sekundären Befestigungsstellen jeweils entsprechende Durchgangsöffnungen bzw. Gewindeöffnungen vorgesehen werden, wozu vergleichsweise viel Bauraum benötigt wird. Außerdem erhöhen sich dadurch die Kosten, da mehr Bauteile zu verbauen sind und mehr Montageschritte erforderlich sind.

Aus der WO 2015/169459 A1 ist ein mit einem Wastegateventil ausgestatteter Abgasturbolader bekannt, dessen Lagergehäuse einen Kühlkanal enthält, wobei eine Zulaufleitung zu diesem Kühlkanal und eine Ablaufleitung von diesem Kühlkanal jeweils durch ein Gehäuse einer Stellvorrichtung zum Betätigen des Wastegateventils hindurchgeführt sind, um so gleichzeitig einen Elektromotor dieser Stellvorrichtung zu kühlen. Anschlüsse für Einlass und Auslass des Kühlmittels sind ebenfalls am Gehäuse der Stellvorrichtung ausgebildet.

Eine gattungsgemäße Stellvorrichtung ist aus der DE 10 2014 106 517 A1 bekannt. Sie umfasst ein Gehäuse, das ein erstes Gehäuseteil und ein zweites Gehäuseteil aufweist. Im Gehäuse ist ein Elektromotor angeordnet zum Antreiben eines außen am Gehäuse angeordneten Stellglieds zum Koppeln mit der zu betätigenden Komponente. Ferner ist im Gehäuse ein Kühlkanal ausgebildet für ein flüssiges Kühlmittel, der mit einem außen am Gehäuse vorgesehenen Kühlmitteleinlassanschluss und mit einem außen am Gehäuse vorgesehenen Kühlmittelauslassanschluss fluidisch verbunden ist. Der Elektromotor ist im zweiten Gehäuseteil angeordnet und ragt zumindest mit seiner Antriebswelle axial in das erste Gehäuseteil hinein, wobei der Kühlkanal am zweiten Gehäuseteil vorgesehen ist.

Die vorliegende Erfindung beschäftigt sich mit dem Problem, für eine Stellvorrichtung der vorstehend beschriebenen Art eine verbesserte oder zumindest eine andere Ausführungsform anzugeben, die sich durch einen verbesserten Schutz vor Überhitzung auszeichnet und dabei eine preiswerte Herstellbarkeit ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, im Gehäuse einen Kühlkanal für ein flüssiges Kühlmittel auszubilden, der mit einem außen am Gehäuse vorgesehenen Kühlmitteleinlassanschluss und mit einem außen am Gehäuse vorgesehenen Kühlmittelauslassanschluss fluidisch verbunden ist. Mit Hilfe eines derartigen Kühlkanals lässt sich sehr effizient Wärme vom Gehäuse abführen, was die thermische Belastung elektrischer und/oder elektronischer Komponenten der Stellvorrichtung erheblich reduziert. Ferner wird vorgeschlagen, das Gehäuse mehrteilig, jedoch zumindest zweiteilig auszugestalten, so dass es ein erstes Gehäuseteil und ein zweites Gehäuseteil aufweist. Zur besonders einfachen Herstellbarkeit der Stellvorrichtung wird außerdem vorgeschlagen, den Elektromotor im zweiten Gehäuseteil anzuordnen, derart, dass er zumindest mit seiner Antriebswelle axial in das erste Gehäuseteil hineinragt. Ferner wird auch der Kühlkanal am zweiten Gehäuseteil vorgesehen, so dass die Wärme gezielt dort abgeführt werden kann, wo sie entsteht bzw. wo sie am meisten stört, nämlich im Bereich des Elektromotors. Des Weiteren wird das erste Gehäuseteil aus Kunststoff hergestellt, wodurch die Stellvorrichtung insgesamt preiswert realisierbar ist. Der Kühlkanal kann im zweiten Gehäuseteil zweckmäßig so angeordnet sein, dass er den Elektromotor in der Umfangsrichtung um mindestens 180° umgreift.

Besonders vorteilhaft ist eine Weiterbildung, bei welcher die beiden Anschlüsse für Kühlmitteleinlass und Kühlmittelauslass am zweiten Gehäuseteil vorgesehen sind. Die Unterbringung des Kühlkanals und der zugehörigen Anschlüsse bzw. in nur einem der beiden Gehäuseteile vereinfacht die Realisierung einer derartigen aktiven Kühlung der Stellvorrichtung. Alternativ kann auch vorgesehen sein, dass der Kühlmitteleinlassanschluss an dem einen Gehäuseteil vorgesehen ist, während der Kühlmittelauslassanschluss am anderen Gehäuseteil vorgesehen ist. Diese Maßnahme kann die Anpassung an unterschiedliche Einbausituationen vereinfachen.

Gemäß einer nicht erfindungsgemäßen Ausführungsform kann das zweite Gehäuseteil aus Metall hergestellt sein. Bevorzugt kommen hierbei ein Leichtmetall bzw. eine Leichtmetalllegierung zum Einsatz, beispielsweise auf Aluminiumbasis. In einem derartigen metallischen zweiten Gehäuseteil ergibt sich ein effizienter Wärmestrom vom Elektromotor zum Kühlmittel, was eine entsprechend rasche Ableitung von Wärme ermöglicht. Je schneller die Wärme vom Gehäuse abgeführt werden kann, desto geringer fällt der Temperaturanstieg am Elektromotor aus.

Besonders vorteilhaft ist eine nicht erfindungsgemäße Ausführungsform, bei der das zweite Gehäuseteil ein Gussteil aus Metall ist. Auch hier kommen Leichtmetall bzw. Leichtmetalllegierungen bevorzugt zum Einsatz. Ein derartiges Gussteil lässt sich besonders preiswert in hohen Stückzahlen realisieren. Das als Gussteil konzipierte zweite Gehäuseteil ist im Unterschied zu einem gebauten zweiten Gehäuseteil nicht mehrteilig, sondern einteilig bzw. in einem Stück hergestellt. Der Kühlkanal kann bei einer nicht erfindungsgemäßen Ausführungsform in das zweite Gehäuseteil, das als Metallteil, insbesondere als Gussteil, ausgestaltet ist, integriert sein. Die Integration des Kühlkanals in das zweite Gehäuseteil bedeutet, dass das Kühlmittel unmittelbar mit dem Werkstoff in Kontakt steht, aus dem das zweite Gehäuseteil besteht.

Besonders zweckmäßig kann der Kühlkanal im zweiten Gehäuseteil an einer dem ersten Gehäuseteil zugewandten Seite axial offen sein und im montierten Zustand durch das erste Gehäuseteil axial verschlossen sein. Die axial offene Bauweise des Kühlkanals ermöglicht eine Formintegration des Kühlkanals in das Gussteil, ohne dass dazu komplexe Gussformen verwendet werden müssen.

Bei einer Weiterbildung kann an einer vom Elektromotor abgewandten Seite des Kühlkanals eine in Umfangsrichtung geschlossen umlaufende, vorzugsweise separate Außendichtung axial zwischen dem ersten Gehäuseteil und dem zweiten Gehäuseteil angeordnet sein. Mit Hilfe dieser Dichtung können Leckagen von Kühlmittel nach außen, also in eine Umgebung der Stellvorrichtung vermieden werden.

Bei einer anderen Weiterbildung kann an einer dem Elektromotor radial zugewandten Seite des Kühlkanals eine in Umfangsrichtung geschlossen umlaufende, vorzugsweise separate, Innendichtung axial zwischen dem ersten Gehäuseteil und dem zweiten Gehäuseteil angeordnet sein. Mit Hilfe einer derartigen Innendichtung kann eine Leckage von Kühlmittel nach innen, also in einem Aufnahmeraum des Gehäuses, in dem der Elektromotor angeordnet ist, vermieden werden. Insbesondere lässt sich dadurch ein preiswerter Elektromotor verwenden, der nicht gegenüber Flüssigkeit abgedichtet ist.

Bei einer anderen Weiterbildung kann vorgesehen sein, dass der Kühlkanal innerhalb des zweiten Gehäuseteils an einer vom ersten Gehäuseteil abgewandten Seite durch einen Kanalboden axial begrenzt ist, der sich in der Umfangsrichtung entlang des gesamten Kühlkanals erstreckt. Somit ist der Kühlkanal zwischen Kühlmitteleinlass und Kühlmittelauslass nicht axial aus dem zweiten Gehäuseteil herausgeführt. Vorzugsweise kann vorgesehen sein, dass der Kühlkanal innerhalb des zweiten Gehäuseteils das Kühlmittel vom Kühlmitteleinlassanschluss in der Umfangsrichtung zum Kühlmittelauslassanschluss führt. Diese Maßnahme bewirkt insbesondere, dass der Kühlkanal zwischen Kühlmitteleinlass und Kühlmittelauslass ausschließlich innerhalb des zweiten Gehäuseteils verläuft. Zusätzlich oder alternativ kann weiter vorgesehen sein, dass der Kühlkanal an einer dem ersten Gehäuseteil zugewandten Axialseite eine sich in der Umfangsrichtung erstreckende, axial offene Kanalöffnung aufweist, die entlang ihrer gesamten Erstreckung in Umfangsrichtung durch das erste Gehäuseteil axial verschlossen ist.

Bei einer alternativen Ausführungsform kann das zweite Gehäuseteil eine Außenschale aus Metall und eine Innenschale aus Metall aufweisen. Die Innenschale ist axial in die Außenschale eingesetzt. Der Kühlkanal ist radial zwischen der Innenschale und der Außenschale ausgebildet. Kühlmitteleinlassanschluss und Kühlmittelauslassanschluss sind an der Außenschale ausgebildet. Der Elektromotor ist axial in die Innenschale eingesetzt. Dementsprechend wird hier für das zweite Gehäuseteil eine Schalenbauweise vorgeschlagen, die mit metallischen Schalen auskommt, die sich besonders einfach, und somit preiswert, herstellen lassen. Beispielsweise kann es sich bei den metallischen Schalen um Blechformteile handeln. Die Anschlüsse für das Kühlmittel können separat hergestellt sein und an der Außenschale auf geeignete Weise angebracht sein, beispielsweise mittels Lötverbindungen oder Schweißverbindungen.

Bei einer vorteilhaften Weiterbildung kann der Kühlkanal radial innen direkt durch eine Umfangswand der Innenschale begrenzt sein, während er radial außen direkt durch eine Umfangswand der Außenschale begrenzt ist. Somit kann eine intensive Kühlung der Innenschale und der Außenschale realisiert werden.

Bei einer anderen Ausführungsform kann der Kühlkanal axial an einer dem ersten Gehäuseteil zugewandten Seite durch einen umlaufenden Kragen der Innenschale direkt begrenzt sein, während er axial an einer vom ersten Gehäuseteil abgewandten Seite durch einen Boden der Außenschale direkt begrenzt ist. Diese Bauweise führt ebenfalls zu einer intensiven Wärmeabführung von der Innenschale und von der Außenschale. Außerdem hat diese Bauweise den Vorteil, dass der Kühlkanal innerhalb der Schalen hermetisch nach außen abgedichtet werden kann, so dass hinsichtlich des Kühlmittels an sich keine weiteren Dichtungen zwischen erstem Gehäuseteil und zweitem Gehäuseteil erforderlich sind.

Gemäß einer Weiterbildung kann die Innenschale eine Bodenöffnung axial durchsetzen, die in einem Boden der Außenschale ausgebildet ist. Zusätzlich kann vorgesehen sein, dass ein die Bodenöffnung einfassender Öffnungsrand des Bodens radial an der Innenschale direkt anliegt. Insbesondere kann dort eine geeignete, dichte Verbindung zwischen Innenschale und Außenschale realisiert werden, beispielsweise eine Lötverbindung oder Schweißverbindung. Zusätzlich oder alternativ kann eine axiale Stirnseite der Außenschale axial an einem umlaufenden Kragen der Innenschale direkt anliegen. Auch hier kann im Kontaktbereich eine geeignete, dichte Verbindung zwischen Innenschale und Außenschale realisiert werden, beispielsweise eine Lötverbindung oder Schweißverbindung. Hierdurch besitzt das zweite Gehäuseteil einen besonders preiswerten Aufbau.

Vorzugsweise kann die Innenschale radial direkt am Elektromotor anliegen, was den Wärmeübergang zwischen Elektromotor und Innenschale erheblich verbessert. Wie bereits erwähnt, handelt es sich bei der Innenschale und bei der Außenschale vorzugsweise um Blechformteile, wobei lediglich die Anschlüsse für das Kühlmittel als separate Bauteile ausgeführt sein können, die an die Außenschale auf geeignete Weise dicht angeschlossen sind. Auch hier können Lötverbindungen und Schweißverbindungen zum Einsatz kommen.

Als weitere Option kann zwischen dem ersten Gehäuseteil und dem zweiten Gehäuseteil eine in der Umfangsrichtung umlaufende Axialdichtung vorgesehen sein, die sich axial an einem umlaufenden Kragen der Innenschale abstützt. Hierdurch wird ein verbesserter Schutz des vom ersten Gehäuseteil umschlossenen Innenraums des Gehäuses vor Verunreinigungen aus der Umgebung der Stellvorrichtung erreicht.

Bei einer nicht erfindungsgemäßen Ausführungsform kann das zweite Gehäuseteil aus Metall bestehen und durch die Außenschale und die Innenschale gebildet sein. Hierdurch besitzt das zweite Gehäuseteil insgesamt einen vergleichsweise preiswerten Aufbau.

Erfindungsgemäß ist ein metallischer Einsatz vorgesehen, der den Kühlkanal, den Kühlmitteleinlassanschluss und den Kühlmittelauslassanschluss aufweist. Dieser Einsatz ist in dem aus Kunststoff hergestellten zweiten Gehäuseteil angeordnet, wobei dann der Kühlmitteleinlassanschluss und der Kühlmittelauslassanschluss durch das zweite Gehäuseteil hindurch nach außen geführt sind. Zweckmäßig können die vorstehend genannte Außenschale und die vorstehend genannte Innenschale diesen Einsatz bilden. Der Einsatz lässt sich jedoch auch auf jede beliebige andere geeignete Weise herstellen. Durch diese Maßnahme wird ein vormontierbarer Einsatz vorgestellt, der den Kühlkanal, den Kühlmitteleinlassanschluss und den Kühlmittelauslassanschluss umfasst. Dieser Einsatz lässt sich besonders einfach dicht herstellen, so dass zusätzliche Abdichtungsmaßnahmen innerhalb des Gehäuses hinsichtlich des Kühlmittels entbehrlich sind. Alle übrigen Funktionen des zweiten Gehäuseteils werden durch den aus Kunststoff hergestellten Bereich des zweiten Gehäuseteils realisiert, wodurch das zweite Gehäuseteil insgesamt preiswert realisierbar ist. Beispielsweise erfolgt die Fixierung der beiden Gehäuseteile aneinander in einem Bereich, in dem das zweite Gehäuseteil aus Kunststoff hergestellt ist.

Zweckmäßig ist der Einsatz als separates Bauteil in das zweite Gehäuseteil eingesetzt. Hierdurch ergibt sich eine vereinfachte Montage. Alternativ kann auch vorgesehen sein, dass das zweite Gehäuseteil an den Einsatz angespritzt ist. In diesem Fall wird der Einsatz als "Einleger" in der Spritzform zum Herstellen des zweiten Gehäuseteils angeordnet bevor der Kunststoff eingespritzt wird. Auch dies vereinfacht die Herstellung. Zweckmäßig können bei diesem Einsatz die Anschlüsse für Einlass und Auslass als Rohre ausgestaltet sein, die an einen C-förmigen Kanalkörper angebracht sind. Dabei kann ferner vorgesehen sein, dass diese Rohre parallel zueinander verlaufen und jeweils tangential in den Kanalkörper übergehen. Hierdurch besitzt der Kühlkanal einen sehr geringen Durchströmungswiderstand.

Gemäß einer besonders vorteilhaften Ausführungsform können mehrere primäre Befestigungsstellen zum Befestigen des Gehäuses an der Maschine vorgesehen sein. Ferner kann wenigstens eine sekundäre Befestigungsstelle zum Befestigen des ersten Gehäuseteils am zweiten Gehäuseteil vorgesehen sein. Besonders vorteilhaft ist eine Ausführungsform, bei welcher die primären Befestigungsstellen so ausgestaltet sind, dass sie zusätzlich zu wenigstens einer sekundären Befestigungsstelle das erste Gehäuseteil am zweiten Gehäuseteil befestigen, wenn mit Hilfe der primären Befestigungsstellen das Gehäuse an der Maschine befestigt ist. Hierdurch vereinfacht sich die Handhabung der Stellvorrichtung insbesondere im Hinblick auf eine Funktionsüberprüfung. Mit anderen Worten, solange die Stellvorrichtung nicht mit ihren primären Befestigungsstellen an der Maschine befestigt ist, sind das erste Gehäuseteil und das zweite Gehäuseteil über die wenigstens eine sekundäre Befestigungsstelle aneinander befestigt. Diese Fixierung der beiden Gehäuseteile aneinander mit Hilfe der wenigstens einen sekundären Befestigungsstelle ist dabei ausreichend dimensioniert für eine Funktionsprüfung der Stellvorrichtung und vereinfacht die Lagerung und den Transport der vormontierten Stellvorrichtungen vor ihrer finalen Montage an der jeweiligen Maschine. Sobald jedoch die Stellvorrichtung bzw. deren Gehäuse mit Hilfe der primären Befestigungsstellen an der jeweiligen Maschine befestigt wird, übernehmen die primären Befestigungsstellen auch die Fixierung der beiden Gehäuseteile aneinander. In diesem Zustand, in dem das Gehäuse an der Maschine mittels der primären Befestigungsstellen befestigt ist, wirken die primären Befestigungsstellen somit zusätzlich zu der wenigstens einen sekundären Befestigungsstelle, um die beiden Gehäuseteile aneinander zu fixieren. Dies bedeutet jedoch, dass die sekundären Befestigungsstellen nach dem Festlegen des Gehäuses an der Maschine nicht mehr benötigt werden und insoweit redundant sind. Die primären Befestigungsstellen sind für den ordnungsgemäßen dauerhaften Betrieb der Stellvorrichtung an der jeweiligen Maschine dimensioniert und können insbesondere thermisch bedingte Effekte und Alterungserscheinungen kompensieren. Die primären Befestigungsstellen ermöglichen somit eine deutlich höhere Belastung der Verbindung zwischen den beiden Gehäuseteilen als die wenigstens eine sekundäre Befestigungsstelle, da letztere nur für die Funktionsüberprüfung eine hinreichende Verbindung zwischen den beiden Gehäuseteilen gewährleisten muss. Diese Ausführungsform beruht somit auf dem allgemeinen Gedanken, die primären und sekundären Befestigungsstellen hinsichtlich der Befestigung der beiden Gehäuseteile aneinander redundant auszugestalten.

Dieser Vorschlag ermöglicht es insbesondere für die jeweilige sekundäre Befestigungsstelle eine preiswerte Lösung zu verwenden, da sie lediglich die Funktionsüberprüfung, nicht jedoch den Dauerbetrieb der Stellvorrichtung an der Maschine gewährleisten muss. Insbesondere kann somit auf eine Schraubverbindung zur Realisierung der jeweiligen sekundären Befestigungsstelle verzichtet werden.

Besonders vorteilhaft ist eine Ausführungsform, bei der die primären Befestigungsstellen jeweils eine erste Primärkontaktstelle und eine zweite Primärkontaktstelle aufweisen, die einander axial zugewandt sind, und bei der mehrere sekundäre Befestigungsstellen vorgesehen sind, die jeweils eine erste Sekundärkontaktstelle und eine zweite Sekundärkontaktstelle aufweisen, die einander axial zugewandt sind. Die primären und sekundären Befestigungsstellen sind nun hinsichtlich dieser Primärkontaktstellen und dieser Sekundärkontaktstellen so aufeinander abgestimmt, dass ein einem ersten Fall, in dem die beiden Gehäuseteile mittels der sekundären Befestigungsstellen aneinander befestigt sind und das Gehäuse nicht mittels der primären Befestigungsstellen an der Maschine befestigt ist, die ersten Sekundärkontaktstellen an den zugehörigen zweiten Sekundärkontaktstellen anliegen, während zwischen den ersten Primärkontaktstellen und den zugehörigen zweiten Primärkontaktstellen ein axialer Primärspalt ausgebildet ist, und dass in einem zweiten Fall, in dem die beiden Gehäuseteile mittels der sekundären Befestigungsstellen aneinander befestigt sind und das Gehäuse mittels der primären Befestigungsstellen an der Maschine befestigt ist, zwischen den ersten Sekundärkontaktstellen und den zugehörigen zweiten Sekundärkontaktstellen ein axialer Sekundärspalt ausgebildet ist, während die ersten Primärkontaktstellen an den zugehörigen zweiten Primärkontaktstellen anliegen. Hierdurch lässt sich im ersten Fall beispielsweise die jeweilige Funktionsprüfung durchführen, während der zweite Fall am Ende der endgültigen Montage vorliegt. Durch den Sekundärspalt kann eine gewisse axiale Beweglichkeit der beiden Gehäuseteile zueinander erhalten bleiben, beispielsweise um die mittels der Sekundärbefestigungsstellen hergestellte Befestigung der beiden Gehäuseteile aneinander wieder einfach lösen zu können, z.B. falls die Funktionsprüfung einen Bedarf für eine Nacharbeitung aufgezeigt hat.

Bei einer vorteilhaften Weiterbildung können die primären Befestigungsstellen jeweils als Schraubverbindung ausgestaltet sein, die jeweils eine Hülse mit einer Durchgangsöffnung zum Durchführen eines Schraubenschafts aufweisen. Die jeweilige Hülse ist dabei axial einenends mit einem Montageanschlag und axial anderenends mit einem Schraubanschlag ausgestattet. Mit dem Montageanschlag stützt sich die jeweilige Hülse an einer Montagestelle der Maschine direkt oder über eine Scheibe indirekt ab, wenn das Gehäuse an der Maschine befestigt ist. Am Schraubanschlag stützt sich ein Schraubenkopf einer den Schraubenschaft aufweisenden Schraube oder eine auf den Schraubenschaft aufgeschraubte Mutter direkt oder über eine Scheibe indirekt axial ab. Des Weiteren ist zweckmäßig vorgesehen, dass die jeweilige Hülse axial geteilt ist, derart, dass sie ein den Montageanschlag aufweisendes, am ersten Gehäuseteil ausgebildetes erstes Hülsenteil und ein den Schraubanschlag aufweisendes, am zweiten Gehäuseteil ausgebildetes zweites Hülsenteil aufweist. Beim Befestigen des Gehäuses an der Maschine wird somit der jeweilige Schraubenschaft durch die jeweilige Hülse bzw. durch deren Durchgangsöffnung axial hindurchgesteckt. Die jeweilige Schraubverbindung verspannt dann das erste Gehäuseteil zwischen dem zweiten Gehäuseteil und der Maschine. Im Einzelnen verspannt die jeweilige Schraubverbindung das erste Hülsenteil axial zwischen dem zweiten Hülsenteil und der jeweiligen Montagestelle der Maschine. Hierdurch wird eine formschlüssige und extrem sichere Fixierung des Gehäuses an der Maschine und der beiden Gehäuseteile aneinander erreicht.

Des Weiteren wird eine Weiterbildung bevorzugt, bei der das erste Gehäuseteil aus Kunststoff hergestellt ist und die ersten Hülsenteile integral am ersten Gehäuseteil ausgeformt sind. Hierdurch lässt sich eine besonders preiswerte Ausgestaltung der Stellvorrichtung im Bereich des ersten Gehäuseteils realisieren. Zusätzlich oder alternativ kann das zweite Gehäuseteil aus Kunststoff oder Metall bestehen und die zweiten Hülsenteile können integral am zweiten Gehäuseteil ausgeformt oder durch an das zweite Gehäuseteil angebaute, separate Bauteile gebildet sein. Die metallische Ausführung des zweiten Gehäuseteils ist insbesondere dann von Interesse, wenn der Kühlkanal unmittelbar im zweiten Gehäuseteil ausgebildet ist.

Bei einer vorteilhaften Ausführungsform kann das jeweilige erste Hülsenteil aus Kunststoff bestehen und eine den Montageanschluss definierende erste Metallhülse enthalten, die sich am metallisch zweiten Gehäuseteil axial abstützt. Die Integration einer derartigen Metallhülse in ein Kunststoffbauteil lässt sich besonders einfach in Form eines sogenannten "Einlegers" realisieren.

Bei einer anderen Ausführungsform kann vorgesehen sein, dass bei der jeweiligen Hülse das eine Hülsenteil durch eine gemeinsame Metallhülse gebildet ist oder aus Kunststoff besteht und eine gemeinsame Metallhülse enthält. Diese gemeinsame Metallhülse definiert den Montageanschlag und den Schraubanschlag. Ferner erstreckt sich diese gemeinsame Metallhülse durch das andere Hülsenteil koaxial hindurch. Die Verwendung einer solchen gemeinsamen Metallhülse vereinfacht die Herstellung der Gehäuseteile. Außerdem können die an dem einen Gehäuseteil ausgebildeten gemeinsamen Metallhülsen beim Anbauen des anderen Gehäuseteils als Positionierhilfen verwendet werden.

Gemäß einer anderen vorteilhaften Ausführungsform können mehrere sekundäre Befestigungsstellen vorgesehen sein, die zweckmäßig jeweils in eine primäre Befestigungsstelle baulich integriert sein können. Durch die Integration der sekundären Befestigungsstellen in die primären Befestigungsstellen benötigen die sekundären Befestigungsstellen am Gehäuse insgesamt deutlich weniger Bauraum als beispielsweise in einem alternativen Fall, bei dem die primären Befestigungsstellen und die sekundären Befestigungsstellen separat ausgeführt und räumlich voneinander getrennt, insbesondere in der Umfangsrichtung zueinander beabstandet entlang des Umfangs der Gehäuseteile angeordnet sind.

Besonders zweckmäßig ist eine Ausführungsform, bei der mehrere sekundäre Befestigungsstellen vorgesehen sind, die jeweils als Rastverbindung ausgestaltet sind. Die jeweilige Rastverbindung umfasst zweckmäßig einen am ersten Gehäuseteil ausgebildeten, insbesondere radial federnden Rasthaken und eine am zweiten Gehäuseteil ausgebildete Rastkontur, die mit dem Rasthaken zum Befestigen des ersten Gehäuseteils am zweiten Gehäuseteil zusammenwirkt. Insbesondere hintergreift hierzu der Rasthaken axial die zugehörige Rastkontur. Die jeweilige Rastkontur kann dabei als zusätzlich an einer Außenseite des zweiten Gehäuseteils vorgesehener Vorsprung ausgestaltet sein oder durch eine ohnehin an der Außenseite des zweiten Gehäuseteils vorhandene Kante gebildet sein. Derartige Rastverbindungen lassen sich für die Funktionsüberprüfung der Stellvorrichtung hinreichend stabil realisieren und ermöglichen ein besonders einfaches Befestigen der beiden Gehäuseteile aneinander.

Besonders zweckmäßig ist eine Ausführungsform, bei welcher der jeweilige Rasthaken am ersten Hülsenteil ausgebildet ist, während die jeweilige Rastkontur am zweiten Hülsenteil ausgebildet ist. Hierdurch wird wieder eine Integration der sekundären Befestigungsstellen in die primären Befestigungsstellen erreicht, die besonders platzsparend ist.

Weiterhin ist eine Ausführungsform von Vorteil, bei der das erste Gehäuseteil aus Kunststoff hergestellt ist und bei der die Rasthaken integral am ersten Gehäuseteil ausgeformt sind. Zusätzlich oder alternativ kann das zweite Gehäuseteil aus Kunststoff oder Metall hergestellt sein und die Rastkonturen können integral am zweiten Gehäuseteil ausgeformt sein. Durch diese Maßnahme lassen sich die Rastverbindungen besonders preiswert realisieren, insbesondere bereits beim Spritzgießen der Gehäuseteile.

Bevorzugt ist eine Ausführungsform, bei der die Rasthaken integral an den ersten Hülsenteilen ausgeformt sind und bei der die ersten Hülsenteile integral am ersten Gehäuseteil ausgeformt sind. Zusätzlich oder alternativ sind die Rastkonturen integral an den zweiten Hülsenteilen ausgeformt, während die zweiten Hülsenteile integral am zweiten Gehäuseteil ausgeformt sind.

Besonders vorteilhaft ist eine Ausführungsform, bei der im ersten Gehäuseteil zumindest ein elektrisches Bauteil in einem Kühlbereich angeordnet ist. Dieser Kühlbereich kann sich in einem dem zweiten Gehäuseteil zugewandten Bereich des ersten Gehäuseteils und insbesondere axial fluchtend zum Kühlkanal befinden. Zusätzlich oder alternativ kann sich dieser Kühlbereich an einer vom zweiten Gehäuseteil abgewandten Innenseite einer axialen Stirnwand des ersten Gehäuseteils befinden, die an ihrer dem zweiten Gehäuseteil zugewandten Außenseite direkt mit dem zweiten Gehäuseteil in Kontakt steht. Durch diese Maßnahmen, die alternativ oder kumulativ oder in beliebiger Kombination realisierbar sind, kann die mit Hilfe des Kühlkanals realisierbare Kühlung auch effizient für wenigstens ein elektrisches Bauteil genutzt werden, das im ersten Gehäuseteil angeordnet ist. Beispielsweise kann ein Sensor zum Ermitteln der aktuellen Position oder Drehlage des Stellglieds relativ zum Gehäuse im ersten Gehäuseteil angeordnet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

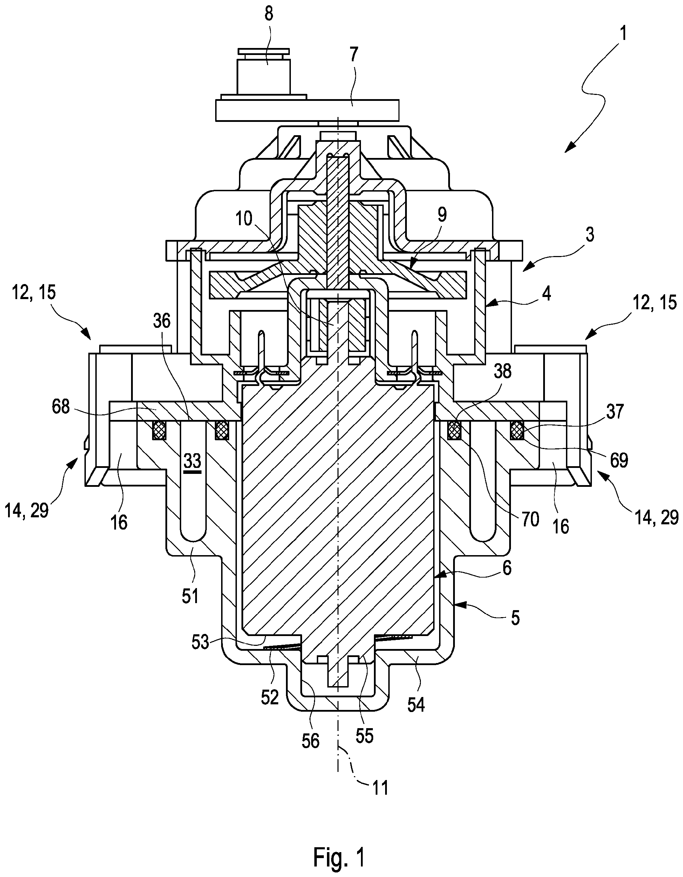

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Dabei zeigen die Figuren 1 und 9 bis 13 keine erfindungsgemäßen Ausführungsformen.

Es zeigen, jeweils schematisch,
- Fig. 1: einen Längsschnitt einer Stellvorrichtung,
- Fig. 2-4: je eine isometrische Ansicht der Stellvorrichtung, jedoch bei verschiedenen Ausführungsformen,
- Fig. 5: eine isometrische Detailansicht der Stellvorrichtung im Bereich einer primären und sekundären Befestigungsstelle,
- Fig. 6: einen Längsschnitt im Bereich einer derartigen Befestigungsstelle,
- Fig. 7-8: je einen Längsschnitt wie in Fig. 6, jedoch bei anderen Ausführungsformen und bei verschiedenen Zuständen a und b,
- Fig. 9: einen Querschnitt der Stellvorrichtung im Bereich eines Kühlkanals,
- Fig. 10: ein Längsschnitt wie in Fig. 1, jedoch in einer anderen Schnittebene,
- Fig. 11: eine isometrische Ansicht eines zweiten Gehäuseteils,
- Fig. 12: eine auseinandergezogene Ansicht des zweiten Gehäuseteils aus Fig. 11,
- Fig. 13: ein Längsschnitt der Stellvorrichtung wie in Fig. 10, jedoch bei einer anderen Schnittebene und bei dem in den Fig. 11 und 12 gezeigten zweiten Gehäuseteil,
- Fig. 14-15: jeweils einen Längsschnitt der Stellvorrichtung wie in den Fig. 10, jedoch bei weiteren Ausführungsformen,
- Fig. 16: eine isometrische Ansicht eines Einsatzes ohne zweites Gehäuseteil,
- Fig. 17: eine isometrische Ansicht des Einsatzes mit zweitem Gehäuseteil.

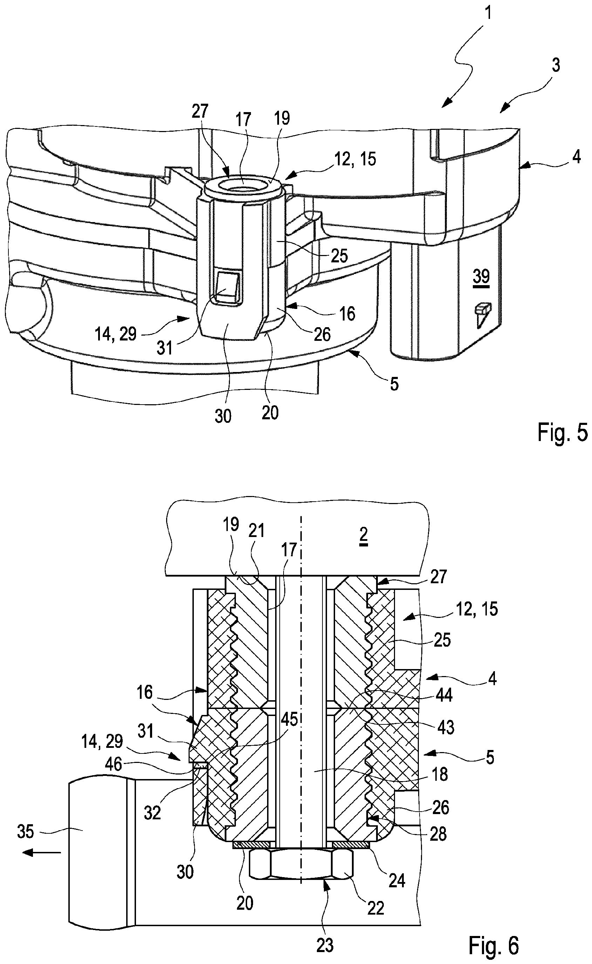

Entsprechend den Fig. 1 bis 17 umfasst eine Stellvorrichtung 1, die sich zum mechanischen Betätigen einer Komponente einer in Fig. 6 nur teilweise dargestellten Maschine 2 eignet, ein Gehäuse 3, das zweiteilig oder mehrteilig ausgestaltet ist und dementsprechend zumindest ein erstes Gehäuseteil 4 und ein zweites Gehäuseteil 5 aufweist. Ferner weist die Stellvorrichtung 1 einen im Gehäuse 3 angeordneten Elektromotor 6 auf, der zum Antreiben eines außen am Gehäuse 3 angeordneten Stellglieds 7 vorgesehen ist. Das Stellglied 7 dient seinerseits zum Koppeln mit der jeweils zu betätigenden Komponente. Beispielsweise weist das Stellglied 7 hierzu einen Zapfen 8 auf. Die Kopplung des Elektromotors 6 mit dem Stellglied 7 erfolgt im Gehäuse 3 über ein mehrstufiges Getriebe 9, das eingangsseitig mit einer Antriebswelle 10 des Elektromotors 6 und ausgangsseitig mit dem Stellglied 7 verbunden ist. Eine Rotationsachse 11 des Elektromotors 6, um welche die Antriebswelle 10 drehend angetrieben ist, definiert eine Axialrichtung, die parallel zur Rotationsachse 11 verläuft.

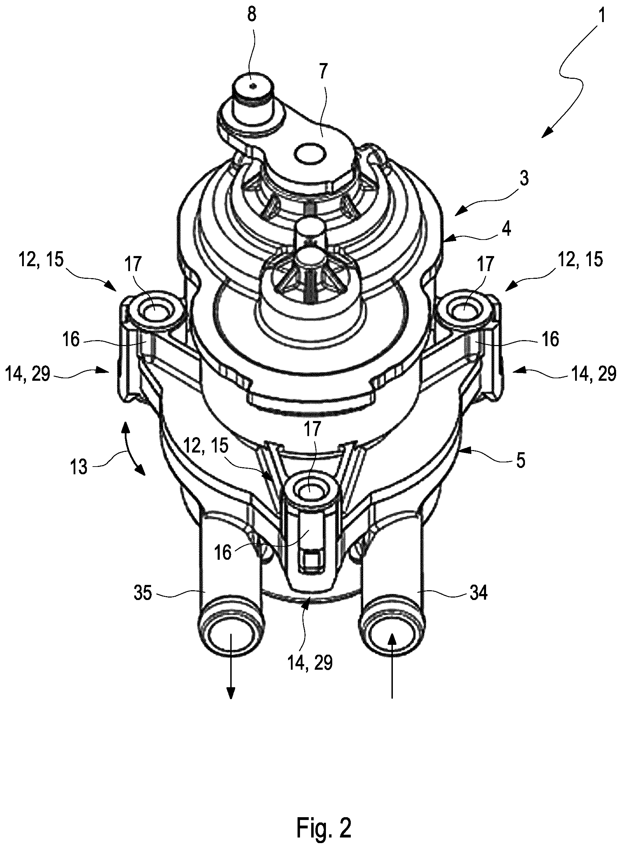

Die Stellvorrichtung 1 weist optional mehrere primäre Befestigungsstellen 12 auf, die zum Befestigen des Gehäuses 3 an der Maschine 2 dienen. Im gezeigten Beispiel sind rein exemplarisch drei derartige primäre Befestigungsstellen 12 vorgesehen, die in der Umfangsrichtung gleichmäßig verteilt angeordnet sind. Die Umfangsrichtung bezieht sich auf die Rotationsachse 11 und ist in den Fig. 2 bis 4 durch einen Doppelpfeil angedeutet und mit 13 bezeichnet. Ferner ist die Stellvorrichtung 1 optional mit wenigstens einer sekundären Befestigungsstelle 14 ausgestattet, die zum Befestigen des ersten Gehäuseteils 4 am zweiten Gehäuseteil 5 dient. Beim hier gezeigten Beispiel sind mehrere derartige sekundäre Befestigungsstellen 14 vorgesehen, nämlich rein exemplarisch genau drei, die ebenfalls in der Umfangsrichtung 13 gleichmäßig beabstandet verteilt angeordnet sind. Die primären und sekundären Befestigungsstellen 12, 14 können auch als primäre und sekundäre Befestigungsmittel 12, 14 bzw. als primäre und sekundäre Befestigungseinrichtungen 12, 14 bezeichnet werden.

Bei der hier vorgestellten Stellvorrichtung 1 sind die primären Befestigungsstellen 12 außerdem dazu vorgesehen, das erste Gehäuseteil 4 zusätzlich zu den sekundären Befestigungsstellen 14 am zweiten Gehäuseteil 5 zu befestigen, wenn mit Hilfe der primären Befestigungsstellen 12 das Gehäuse 3 an der Maschine 2 befestigt ist. Bei an der Maschine 2 befestigter Stellvorrichtung 1 sind somit die beiden Gehäuseteile 4, 5 redundant aneinander befestigt, nämlich einerseits mittels der sekundären Befestigungsstellen 14 und andererseits mittels der primären Befestigungsstellen 12.

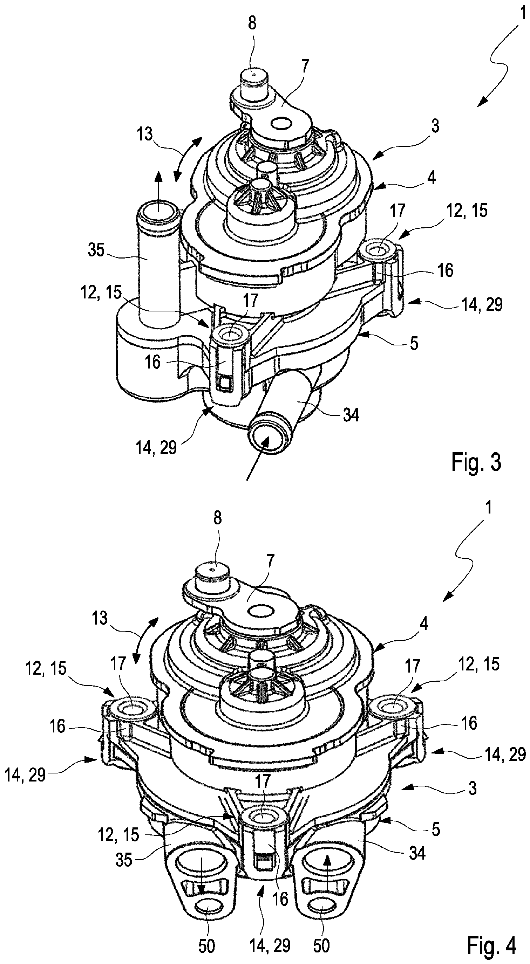

Bei dem hier gezeigten Beispiel sind die primären Befestigungsstellen 12 jeweils als Schraubverbindung 15 ausgestaltet. Diese Schraubverbindungen 15 weisen jeweils eine Hülse 16 auf, die eine Durchgangsöffnung 17 enthält, durch die ein nur in Fig. 6 gezeigter Schraubenschaft 18 durchführbar ist. Bezug nehmend auf Fig. 6 weist die jeweilige Hülse 16 axial einenends einen Montageanschlag 19 und axial anderenends einen Schraubanschlag 20 auf. Im gezeigten montierten Zustand stützt sich der Montageanschlag 19 axial an einer Montagestelle 21 der Maschine 2 direkt ab. Im Unterschied dazu stützt sich am Schraubanschlag 20 ein Schraubenkopf 22 einer den Schraubenschaft 18 aufweisenden Schraube 23 indirekt über eine Scheibe 24 axial ab. Grundsätzlich kann auch zwischen der Montagestelle 21 und dem Montageanschlag 19 eine Scheibe für eine indirekte Abstützung angeordnet sein. Im Beispiel der Fig. 4 ist die Schraube 23 in die Maschine 2 eingeschraubt. Hierzu weist die Montagestelle 21 eine entsprechende, hier nicht gezeigte Gewindeöffnung auf. Alternativ dazu ist es ebenso möglich, den Schraubenschaft 18 in Form einer Gewindestange oder Stiftschraube zu realisieren, die von der Montagestelle 21 ausgeht, insbesondere fest an der Maschine 2 angeordnet ist. In diesem Fall wird auf diesen Schraubenschaft 18 eine entsprechende Mutter aufgeschraubt, die sich dann anstelle des Schraubenkopfs 22 über die Scheibe 24 am Schraubanschlag 20 axial abstützt.

Entsprechend den Fig. 6 bis 8 ist die zuvor genannte Hülse 16 der Schraubverbindung 15 axial geteilt, so dass sie ein erstes Hülsenteil 25 und ein zweites Hülsenteil 26 aufweist. Das erste Hülsenteil 25 ist am ersten Gehäuseteil 4 ausgebildet und weist den Montageanschlag 19 auf. Das zweite Hülsenteil 26 ist am zweiten Gehäuseteil 5 ausgebildet und weist den Schraubanschlag 20 auf. Vorzugsweise ist das erste Gehäuseteil 4 aus Kunststoff hergestellt. Die ersten Hülsenteile 25 sind dann zweckmäßig integral am ersten Gehäuseteil 4 ausgeformt. Das zweite Gehäuseteil 5 ist vorzugsweise ein Gussteil aus Kunststoff oder Metall. Bevorzugt handelt es sich um ein Metallteil, das sich durch eine erhöhte Wärmeleitung auszeichnet. Bevorzugt kommt dabei ein Leichtmetall bzw. eine Leichtmetalllegierung, vorzugsweise auf Aluminiumbasis, in Betracht.

Gemäß Fig. 6 besteht das erste Hülsenteil 25 somit vorzugsweise aus Kunststoff und enthält eine erste Metallhülse 27, die den Montageanschlag 19 definiert. Ein axiales Stirnende der ersten Metallhülse 27 bildet hierzu den Montageanschlag 19. Das erste Hülsenteil 27 ist beim Spritzformen des ersten Gehäuseteils 4 in der Spritzform angeordnet, so dass es formschlüssig in den Kunststoff des ersten Hülsenteils 25 eingebettet ist. Im Beispiel der Fig. 6 ist auch das zweite Hülsenteil 26 aus Kunststoff hergestellt und mit einer zweiten Metallhülse 28 ausgestattet, die den Schraubanschlag 20 definiert. Hierzu ist der Schraubanschlag 20 an einer axialen Stirnseite der zweiten Metallhülse 28 ausgebildet. Sofern das zweite Gehäuseteil 5 gemäß der hier bevorzugten Bauweise ein Metallgussteil ist, kann auf eine separate zweite Metallhülse 28 verzichtet werden; beziehungsweise kann dann das zweite Hülsenteil 26 selbst die zweite Metallhülse 28 bilden. Im montierten Zustand stützt sich die erste Metallhülse 27 axial an der zweiten Metallhülse 28 direkt ab.

Sofern wie hier die Anzahl an primären Befestigungsstellen 12 und sekundären Befestigungsstellen 14 gleich ist, wird eine Ausführungsform bevorzugt, bei der je eine sekundäre Befestigungsstelle 14 in je eine primäre Befestigungsstelle 12 integriert ist. Hierdurch ergibt sich eine signifikante Bauraumeinsparung entlang des Umfangs des Gehäuses 3.

Bei den hier gezeigten, bevorzugten Beispielen sind die sekundären Befestigungsstellen 14 jeweils als Rastverbindung 29 ausgestaltet. Die jeweilige Rastverbindung 29 weist einen am ersten Gehäuseteil 4, hier am ersten Hülsenteil 25, ausgebildeten, radial federelastischen Rasthaken 30 auf. Außerdem weist die jeweilige Rastverbindung 29 eine am zweiten Gehäuseteil 5 bzw. hier am zweiten Hülsenteil 26 ausgebildete Rastkontur 31 auf, die komplementär zum Rasthaken 30 geformt ist und die mit dem Rasthaken 30 zum Befestigen des ersten Gehäuseteils 4 am zweiten Gehäuseteil 5 zusammenwirkt. Die Rastkontur 30 ist hier in Form einer Rastnase mit Rampe ausgestaltet. Zweckmäßig ist der jeweilige Rasthaken 30 integral am ersten Hülsenteil 25 ausgeformt, während die Rastkontur 31 zweckmäßig integral am zweiten Hülsenteil 26 ausgebildet ist.

Erkennbar hintergreift der Rasthaken 30 die Rastkontur 31 axial, wodurch in axialer Richtung ein effizienter Formschluss entsteht, der eine hinreichende Fixierung der beiden Gehäuseteile 4, 5 aneinander gewährleistet, beispielsweise um eine Funktionsprüfung der Stellvorrichtung 1 durchführen zu können. Sobald jedoch, wie in Fig. 6 gezeigt, das Gehäuse 3 an der Maschine 2 befestigt ist, übernehmen die primären Befestigungsstellen 12 die Fixierfunktion zum Fixieren der beiden Gehäuseteile 4, 5 aneinander. Insbesondere kann dabei auch die Haltekraft der sekundären Befestigungsstellen 14 aufgehoben werden. In Fig. 6 ist ein Axialspalt 32 zwischen dem Rasthaken 30 und der Rastkontur 31 erkennbar, so dass in diesem montierten Zustand keine Axialkräfte zwischen Rasthaken 30 und Rastkontur 31 übertragen werden. Mit anderen Worten, die sekundäre Befestigungsstelle 14 bzw. die Rastverbindung 29 überträgt hier keine axialen Kräfte zwischen dem ersten Bauteil 4 und dem zweiten Bauteil 5 und ist insoweit deaktiviert.

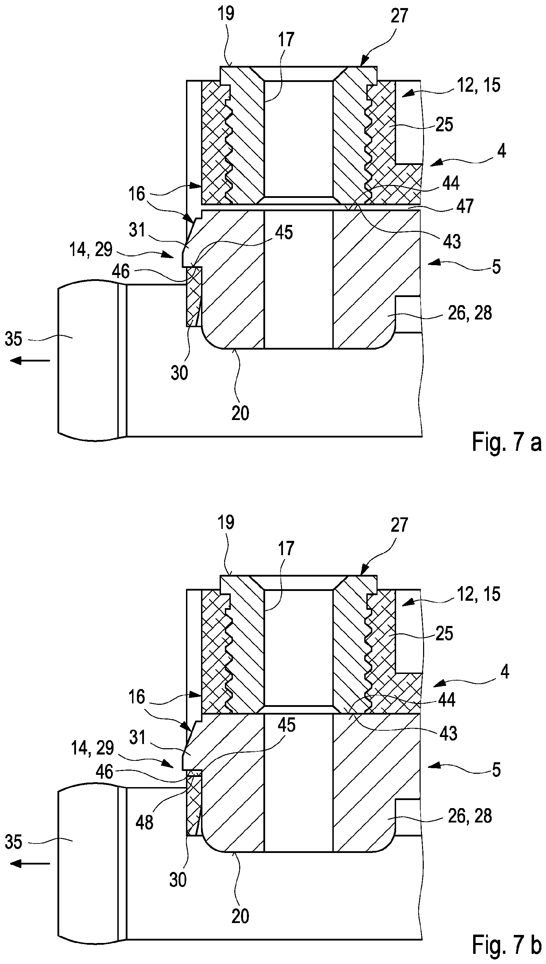

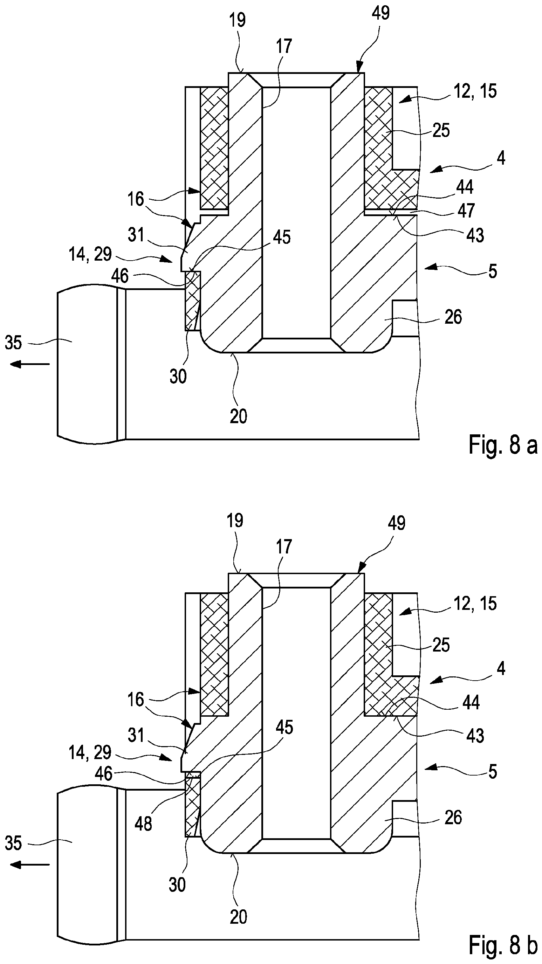

Dieses Zusammenspiel von primären Befestigungsstellen 12 und sekundären Befestigungsstellen 14 wird nachfolgend anhand der Fig. 7 und 8 näher erläutert, die sich durch die Ausgestaltung der Hülse 16 und/oder der jeweiligen Metallhülse 27, 28 sowie in der Materialauswahl für das zweite Gehäuseteil 5 voneinander unterscheiden. Darauf wird jedoch noch weiter unten eingegangen.

Gemäß den Fig. 7 und 8 weisen die primären Befestigungsstellen 12 jeweils eine erste Primärkontaktstelle 43 und eine zweite Primärkontaktstelle 44 auf, die einander axial zugewandt sind. Die erste Primärkontaktstelle 43 befindet sich an einer dem zweiten Hülsenteil 26 zugewandten axialen Stirnseite des ersten Hülsenteils 25. Die zweite Primärkontaktstelle 44 befindet sich an einer dem ersten Hülsenteil 25 zugewandten axialen Stirnseite des zweiten Hülsenteils 26. Im Beispiel der Fig. 6 befinden sich diese Primärkontaktstellen 43, 44 an den Metallhülsen 27, 28. Die sekundären Befestigungsstellen 14 weisen jeweils eine erste Sekundärkontaktstelle 45 und eine zweite Sekundärkontaktstelle 46 auf, die einander axial zugewandt sind. Die erste Sekundärkontaktstelle 45 befindet sich am Rasthaken 30, während sich die zweite Sekundärkontaktstelle 46 an der Rastkontur 31 befindet. In den Fig. 7a und 8a ist jeweils ein erster Fall oder erster Zustand dargestellt, während in den Fig. 7b und 8b jeweils ein zweiter Fall oder Zustand dargestellt ist. Im ersten Fall sind gemäß den Fig. 7a, 8a die beiden Gehäuseteile 4, 5 mittels der sekundären Befestigungsstellen 14 aneinander befestigt, wobei im ersten Fall das Gehäuse 3 noch nicht mittels der primären Befestigungsstellen 12 an der Maschine 2 befestigt ist. In diesem ersten Fall liegen die ersten Sekundärkontaktstellen 45 an den zugehörigen zweiten Sekundärkontaktstellen 46 an, während zwischen den ersten Primärkontaktstellen 43 und den zugehörigen zweiten Primärkontaktstellen 43 ein axialer Primärspalt 47 ausgebildet ist. Mit anderen Worten, im ersten Fall liegen die Primärkontaktstellen 43, 44 nicht aneinander an. Im zweiten Fall sind gemäß den Fig. 7b und 8b die beiden Gehäuseteile 4, 5 wieder mittels der sekundären Befestigungsstellen 14 aneinander befestigt, wobei das Gehäuse 3 im zweiten Fall außerdem mittels der primären Befestigungsstellen 12 an der Maschine 2 befestigt ist. Wie vorstehend beschrieben, sind die beiden Gehäuseteile 4, 5 in diesem zweiten Fall zusätzlich auch durch die Primärbefestigungsstellen 12 aneinander befestigt. In diesem zweiten Fall ist zwischen den ersten Sekundärkontaktstellen 45 und den zugehörigen zweiten Sekundärkontaktstellen 46 ein axialer Sekundärspalt 48 ausgebildet, während die ersten Primärkontaktstellen 43 an den zugehörigen zweiten Primärkontaktstellen 44 anliegen. Mit anderen Worten, im zweiten Fall liegen die Sekundärkontaktstellen 45, 46 nicht aneinander an. Der in Fig. 6 gezeigte Zustand entspricht somit dem zweiten Fall der Fig. 7b und 8b. Dementsprechend entspricht der in Fig. 6 gezeigte Axialspalt 32 dem Sekundärspalt 48 der Fig. 7b und 8b.

Während bei dem in Fig. 6 gezeigten Beispiel das zweite Gehäuseteil 5 aus Kunststoff hergestellt ist und das daran integral ausgebildete zweite Hülsenteil 26 eine darin eingesetzte zweite Metallhülse 28 aufweist, ist bei dem in Fig. 7 gezeigten Beispiel das zweite Gehäuseteil 5 aus Metall hergestellt. Die zweite Metallhülse 28 ist dabei durch das integral am zweiten Gehäuseteil 5 ausgeformte zweite Hülsenteil 26 gebildet.

Fig. 8 zeigt nun eine weitere Ausführungsform, bei der das zweite Hülsenteil 26, das integral am zweiten Gehäuseteil 5 ausgeformt ist, durch eine gemeinsame Metallhülse 49 gebildet ist. Im Beispiel der Fig. 8 ist das zweite Gehäuseteil 5 aus Metall hergestellt, so dass zweckmäßig diese gemeinsame Metallhülse 49 integral am zweiten Gehäuseteil 5 ausgeformt ist. Bei einer anderen Ausführungsform kann dagegen vorgesehen sein, diese gemeinsame Metallhülse 49 als separates Bauteil vorzusehen, insbesondere dann, wenn das zweite Gehäuseteil 5 aus Kunststoff hergestellt ist. Dann kann auch die gemeinsame Metallhülse 49 als Einleger ausgestaltet und in das jeweilige Hülsenteil 25 oder 26 eingebunden sein. Diese gemeinsame Metallhülse 49 weist axial einerseits den Montageanschlag 19 und axial andererseits den Schraubanschlag 20 auf. Ferner erstreckt sich diese gemeinsame Metallhülse 49 ausgehend vom zweiten Hülsenteil 26 durch das erste Hülsenteil 25 koaxial hindurch. Bei separater Bauweise der gemeinsamen Metallhülse 49 erstreckt sich diese durch beide Hülsenteile 25, 26 hindurch.

Zurückkommend auf das in Fig. 1 gezeigte Beispiel kann im Gehäuse 3 ein Kühlkanal 33 ausgebildet sein, der von einem flüssigen Kühlmittel durchströmbar ist. Ferner finden sich am Gehäuse 3 gemäß den Fig. 2 bis 4 und 9 bis 13 ein Kühlmitteleinlassanschluss 34, der mit dem Kühlkanal 33 fluidisch verbunden ist, sowie ein Kühlmittelauslassanschluss 35, der ebenfalls mit dem Kühlkanal 33 fluidisch verbunden ist. Vorzugsweise ist der Kühlkanal 33 am bzw. im zweiten Gehäuseteil 5 vorgesehen. In den bevorzugten Beispielen der Fig. 1, 2, 4 und 9 bis 13 sind außerdem die beiden Anschlüsse 34, 35 am zweiten Gehäuseteil 5 vorgesehen. Im Unterschied dazu zeigt Fig. 3 eine Variante, bei welcher der eine Anschluss, hier der Kühlmitteleinlassanschluss 34 am zweiten Gehäuseteil 5 ausgebildet ist, während der Kühlmittelauslassanschluss 35 am ersten Gehäuseteil 4 ausgebildet ist. Insbesondere ist der Kühlkanal 33 dabei in das zweite Gehäuseteil 5 formintegriert. Ferner sind die beiden Anschlüsse 34, 35 integral am ersten Gehäuseteil 4 bzw. am zweiten Gehäuseteil 5 ausgeformt. Alternativ können die Anschlüsse 34, 35 auch separate Bauteile sein, die an das zweite Gehäuseteil 5 angebaut sind. Sofern ein derartiger Kühlkanal 33 vorgesehen ist, handelt es sich beim zweiten Gehäuseteil 5 bevorzugt um ein Metallteil, um die anfallende Wärme rascher auf das Kühlmittel übertragen und vom Gehäuse 3 abführen zu können.

In den Beispielen der Fig. 2 und 3 sind die besagten Anschlüsse 34, 35 als Anschlussstutzen ausgestaltet, während Fig. 4 ein Beispiel zeigt, bei dem die Anschlüsse 34, 35 jeweils als Anschlussflansch ausgestaltet sind. Dem jeweiligen Anschlussflansch ist zur Befestigung an einem dazu komplementären Flansch jeweils eine Schrauböffnung 50 zugeordnet, durch die eine entsprechende Schraube durchführbar ist.

Wie sich Fig. 1 entnehmen lässt, ist der Kühlkanal 33 im zweiten Gehäuseteil 5 an einer dem ersten Gehäuseteil 4 zugewandten Seite axial offen. Diese axiale Kanalöffnung ist in Fig. 1 mit 36 bezeichnet. Diese axiale Kanalöffnung 36 erstreckt sich in der Umfangsrichtung 13, zweckmäßig entlang des gesamten Kühlkanals 33. Ferner ist die Kanalöffnung 36 entlang ihrer gesamten Erstreckung in Umfangsrichtung 13 durch das erste Gehäuseteil 4 axial verschlossen. Der Kühlkanal 33 umschließt den Elektromotor 6 in der Umfangsrichtung 13 über mehr als 180°, so dass der Kühlkanal 33 in einem Axialschnitt C-förmig ist. Die Endbereiche des Kühlkanals 33 kommunizieren mit je einem der Anschlüsse 34, 35. In der Umfangrichtung 13 zwischen den Anschlüssen 34, 35 ist der Kühlkanal 33 unterbrochen.

Gemäß Fig. 1 sind außerdem eine separate Außendichtung 37 und eine separate Innendichtung 38 vorgesehen. Die Außendichtung 37 läuft in der Umfangsrichtung 13 geschlossen um und ist an einer vom Elektromotor 6 radial abgewandten Seite des Kühlkanals 33 zwischen dem ersten Gehäuseteil 4 und dem zweiten Gehäuseteil 5 angeordnet. Die Innendichtung 38 läuft ebenfalls in der Umfangsrichtung 13 geschlossen um und ist an einer dem Elektromotor 6 radial zugewandten Seite des Kühlkanals 33 zwischen dem ersten Gehäuseteil 4 und dem zweiten Gehäuseteil 5 angeordnet. Diese als separate Bauteile realisierten Dichtungen 37, 38 sind hier in ringförmig umlaufende Nuten 69, 70 eingesetzt, die im zweiten Gehäuseteil 5 ausgebildet sind. Im Einzelnen ist die Außendichtung 37 in eine radial weiter außen liegende Außennut 69 eingesetzt, während die Innendichtung 38 in eine radial weiter innen liegende Innennut 70 eingesetzt ist. Außendichtung 37 und Innendichtung 38 können bei einer anderen, hier nicht gezeigten Ausführungsform auch Abschnitte einer gemeinsamen Dichtung sein, die zweckmäßig einen stegartigen Verbindungsabschnitt aufweist, der die beiden Dichtungsabschnitte 37, 38 miteinander verbindet und der sich im eingebauten Zustand über die offene Seite 36 des Kühlkanals 33 erstreckt und diesen axial abdeckt.

Sofern es sich beim zweiten Gehäuseteil 5 ebenfalls um ein Kunststoffteil handelt, kann auf eine zusätzliche Dichtung zwischen den Gehäuseteilen 4, 5 verzichtet werden. Beispielsweise kann eine entsprechend flüssigkeitsdichte Verbindungstechnik zum Einsatz kommen. Denkbar ist bspw. eine Schweißverbindung oder eine Klebverbindung.

Ferner lässt sich Fig. 1 außerdem entnehmen, dass der Kühlkanal 33 innerhalb des zweiten Gehäuseteils 5 an einer vom ersten Gehäuseteil 4 abgewandten Seite durch einen Kanalboden 51 axial begrenzt ist. Des Weiteren ist hier vorgesehen, dass der Kühlkanal 33 innerhalb des zweiten Gehäuseteils 5 vom Kühlmitteleinlassanschluss 34 in der Umfangsrichtung 13 zum Kühlmittelauslassanschluss 35 führt.

Gemäß Fig. 1 kann im zweiten Gehäuseteil 5 außerdem eine Vorspannfeder 52 angeordnet sein, z.B. in Form einer Wellfeder, die den Elektromotor 6 in Richtung zum ersten Gehäuseteil 4 antreibt bzw. vorspannt. Hierzu stützt sich die Vorspannfeder 52 einerseits an einer vom ersten Gehäuseteil 4 abgewandten Rückseite 53 des Elektromotors 6 und andererseits an einem vom ersten Gehäuseteil 4 abgewandten Gehäuseboden 54 des zweiten Gehäuseteils 5 ab. Die Vorspannfeder 52 kann ringförmig ausgestaltet sein und zweckmäßig einen axialen Vorsprung 55 des Elektromotors 6 umgreifen, der an dessen Rückseite 53 axial vorsteht. Im Beispiel kann der Vorsprung 55 in eine im Gehäuseboden 54 ausgesparte Vertiefung 56 eingreifen, in der er axial verstellbar geführt ist.

In Fig. 5 ist ein elektrischer Anschluss 39 erkennbar, über den der Elektromotor 6 mit elektrischer Energie versorgt werden kann und über den der Elektromotor 6 angesteuert werden kann. Sofern im Gehäuse 3, außerdem eine Sensorik oder dergleichen angeordnet ist, beispielsweise um die aktuelle Drehlage des Stellglieds 7 zu detektieren, kann über den Elektroanschluss 39 auch eine entsprechende Datenleitung geführt sein.

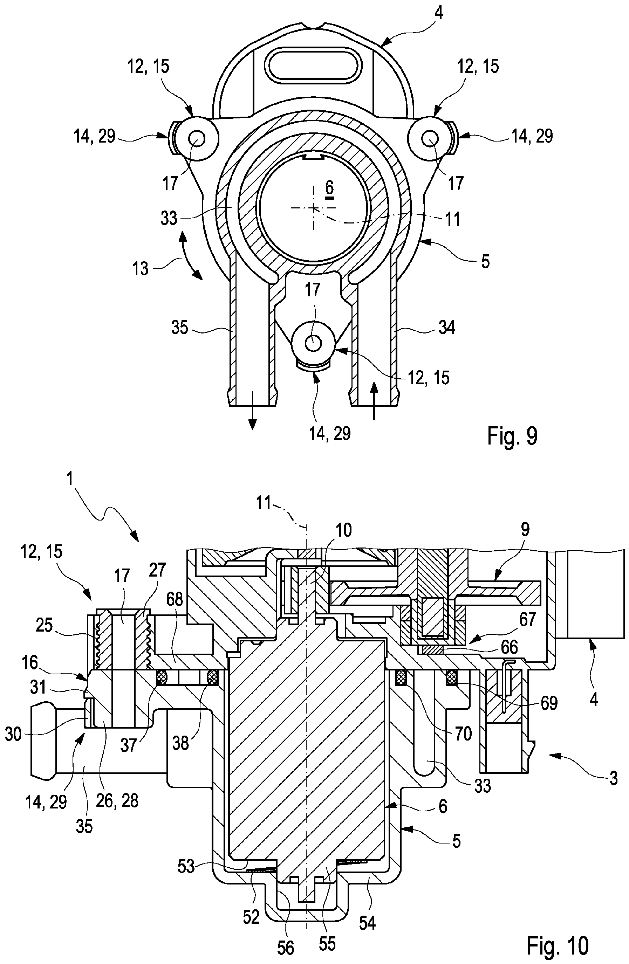

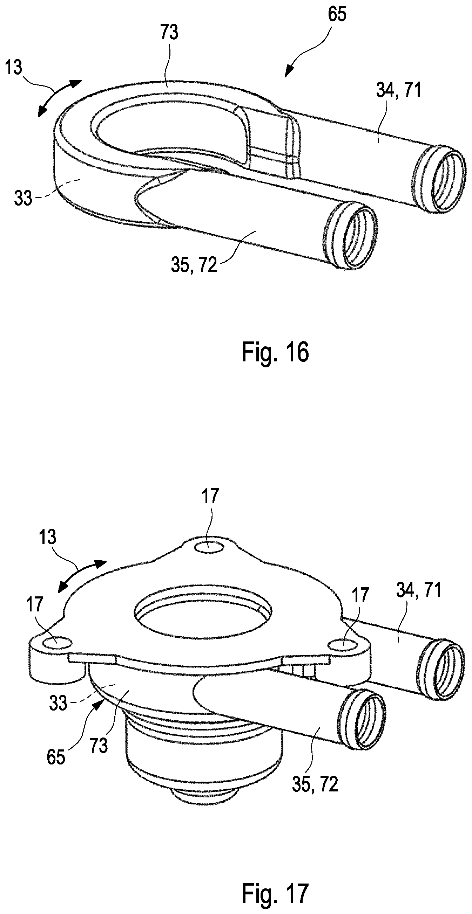

Wie sich insbesondere den Fig. 9, 16 und 17 entnehmen lässt, erstreckt sich der Kühlkanal 33 zweckmäßig über mehr als 180° in der Umfangsrichtung 13. Insbesondere kann sich der Kühlkanal 33 in der Umfangsrichtung 13 über mindestens 270° erstrecken. Im Beispiel der Fig. 9 erstreckt sich der Kühlkanal 33 in der Umfangsrichtung 13 über etwa 310°, während er sich im Beispiel der Fig. 16 und 17 über etwa 270° erstreckt.

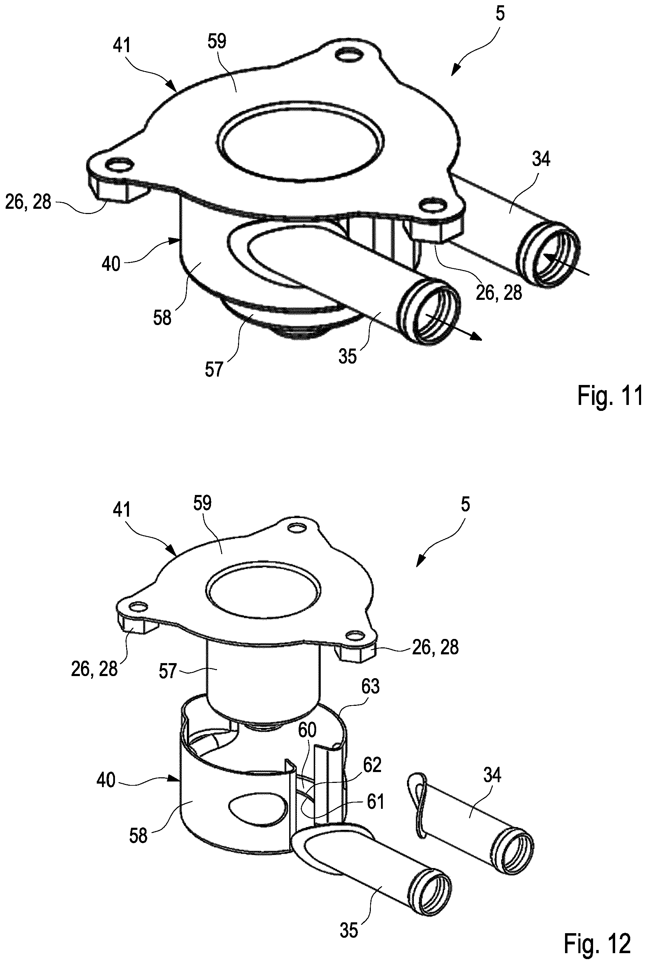

In den Beispielen der Fig. 1 bis 5 und 7 bis 10 einerseits und der Fig. 11 bis 13 andererseits ist das zweite Gehäuseteil 5 jeweils aus Metall hergestellt. Im Unterschied dazu zeigen die Fig. 6 und 14 bis 17 Ausführungsformen, bei denen das zweite Gehäuseteil 5 aus Kunststoff hergestellt ist.

Im Beispiel der Fig. 1 bis 5 und 7 bis 10 ist das zweite Gehäuseteil 5 als Metallgussteil konzipiert, wobei hier als Metall ein Leichtmetall, vorzugsweise eine Leichtmetalllegierung, insbesondere auf Aluminiumbasis, bevorzugt ist. Wie erwähnt ist der Kühlkanal 33 bei dieser Ausführungsform im zweiten Gehäuseteil 5 an der dem ersten Gehäuseteil 4 zugewandten Seite mit der Kanalöffnung 36 versehen und dementsprechend axial offen und durch das erste Gehäuseteil 4 axial verschlossen. Hierdurch kann der Kühlkanal 33 im gegossenen zweiten Gehäuseteil 5 besonders einfach formintegriert realisiert werden.

In den Fig. 8 bis 10 ist außerdem erkennbar, wie das zweite Hülsenteil 26 integral am zweiten Gehäuseteil 5 ausgeformt ist und dabei ohne zusätzliche separate zweite Metallhülse 28 auskommt. Vielmehr ist das zweite Hülsenteil 26 hier durch die zweite Metallhülse 28 gebildet.

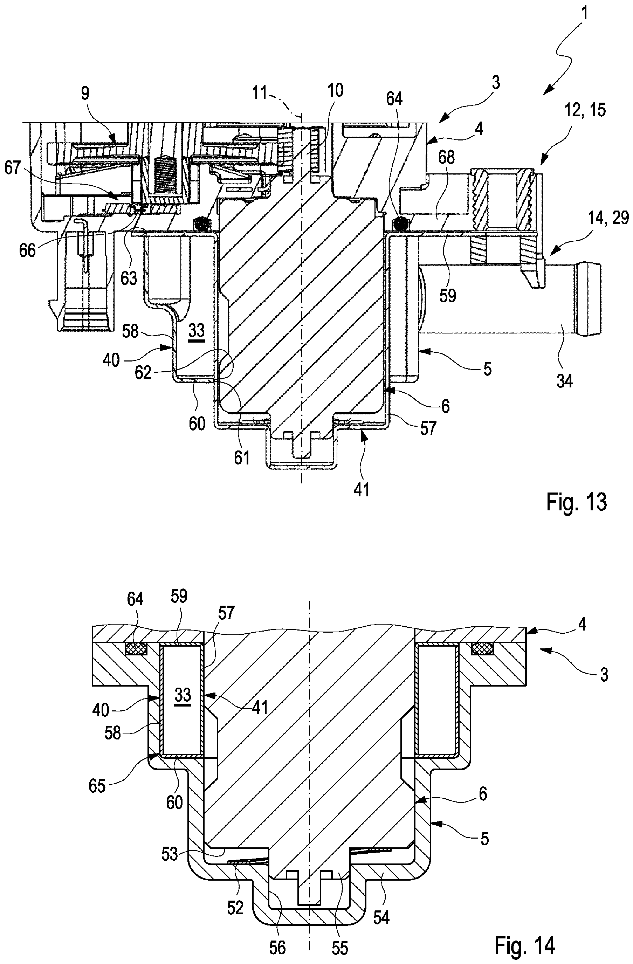

In den Beispielen der Fig. 11 bis 14 weist das zweite Gehäuseteil 5 eine Außenschale 40 aus Metall und eine Innenschale 41 aus Metall auf. Die Innenschale 41 ist axial in die Außenschale 40 eingesetzt, so dass der Kühlkanal 33 radial zwischen der Innenschale 41 und der Außenschale 40 ausgebildet ist. Der Kühlmitteleinlassanschluss 34 und der Kühlmittelauslassanschluss 35 sind an der Außenschale 40 vorgesehen. Der Elektromotor 6 ist gemäß den Fig. 13 und 14 axial in die Innenschale 41 eingesetzt. Durch diese Schalenbauweise lässt sich der Kühlkanal 33 ebenfalls besonders preiswert realisieren.

Gemäß den Fig. 11 bis 14 ist der Kühlkanal 33 radial innen direkt durch eine Umfangswand 57 der Innenschale 41 begrenzt. Radial außen ist der Kühlkanal 33 durch eine Umfangswand 58 der Außenschale 40 begrenzt. Der Kühlkanal 33 ist des Weiteren axial an einer dem ersten Gehäuseteil 4 zugewandten Seite durch einen umlaufenden Kragen 59 der Innenschale 41 direkt begrenzt. An einer vom ersten Gehäuseteil 4 abgewandten Seite ist der Kühlkanal 33 durch einen Boden 60 der Außenschale 40 direkt begrenzt.

Bei der in den Fig. 11 bis 13 gezeigten Ausführungsform ist die Innenschale 41 in eine Bodenöffnung 61 axial eingesetzt, die im Boden 60 der Außenschale 40 ausgebildet ist. Die Bodenöffnung 61 ist dabei von einem Öffnungsrand 62 eingefasst, der radial an der Innenschale 41 bzw. an deren Umfangswand 57 direkt anliegt und damit dicht verbunden ist. Ferner liegt eine axiale Stirnseite 63 der Außenschale 40 axial an dem umlaufenden Kragen 59 der Innenschale 41 direkt an und ist damit auf geeignete Weise dicht verbunden. Geeignete dichte Verbindungen sind beispielsweise Lötverbindungen oder Schweißverbindungen.

Bei den Ausführungsformen der Fig. 11 bis 14 kann die Innenschale 41, insbesondere mit ihrer Umfangswand 57, direkt radial am Elektromotor 6 anliegen, um die Wärmeübertragung zu verbessern. Bei beiden Ausführungsformen sind die Innenschale 41 und die Außenschale 40 als Blechformteile konzipiert. An die Innenschale 41 sind die zweiten Hülsenteile 26 bzw. die zweiten Metallhülsen 28, welche die zweiten Hülsenteile 26 bilden, in Form separater Bauteile am Kragen 59 angebracht, beispielsweise damit verlötet oder verschweißt. In beiden Beispielen der Fig. 11 bis 14 sind die Anschlüsse 34, 35 separate Bauteile, die auf geeignete Weise dicht mit der Außenschale 40 verbunden sind, beispielsweise durch Verlöten oder Verschweißen.

Wie sich den Fig. 13 und 14 entnehmen lässt, kann axial zwischen dem ersten Gehäuseteil 4 und dem zweiten Gehäuseteil 5 eine in der Umfangsrichtung 13 umlaufende Axialdichtung 64 vorgesehen sein. Diese Axialdichtung 64 stützt sich bei der in Fig. 13 gezeigten Ausführungsform axial am Kragen 59 ab.

Im Beispiel der Fig. 11 bis 13 ist das zweite Gehäuseteil 5 durch die Außenschale 40 und die Innenschale 41 gebildet. Somit besteht das zweite Gehäuseteil 5 bei dieser Ausführungsform aus Metall.

Im Unterschied dazu zeigt Fig. 14 eine Ausführungsform, bei der die Außenschale 40 und die Innenschale 41 einen Einsatz 65 bilden, der den Kühlkanal 33, den Kühlmitteleinlassanschluss 34 und den Kühlmittelauslassanschluss 35 aufweist. Dieser Einsatz 65 ist in das zweite Gehäuseteil 5 eingesetzt, das zweckmäßig aus Kunststoff hergestellt ist. Dabei sind der Kühlmitteleinlassanschluss 34 und der Kühlmittelauslassanschluss 35 durch das zweite Gehäuseteil 5 hindurch nach außen geführt. Dementsprechend ist bei der in Fig. 14 gezeigten Ausführungsform die umlaufende Axialdichtung 64 zweckmäßig am zweiten Gehäuseteil 5 radial außerhalb des Einsatzes 65 abgestützt.

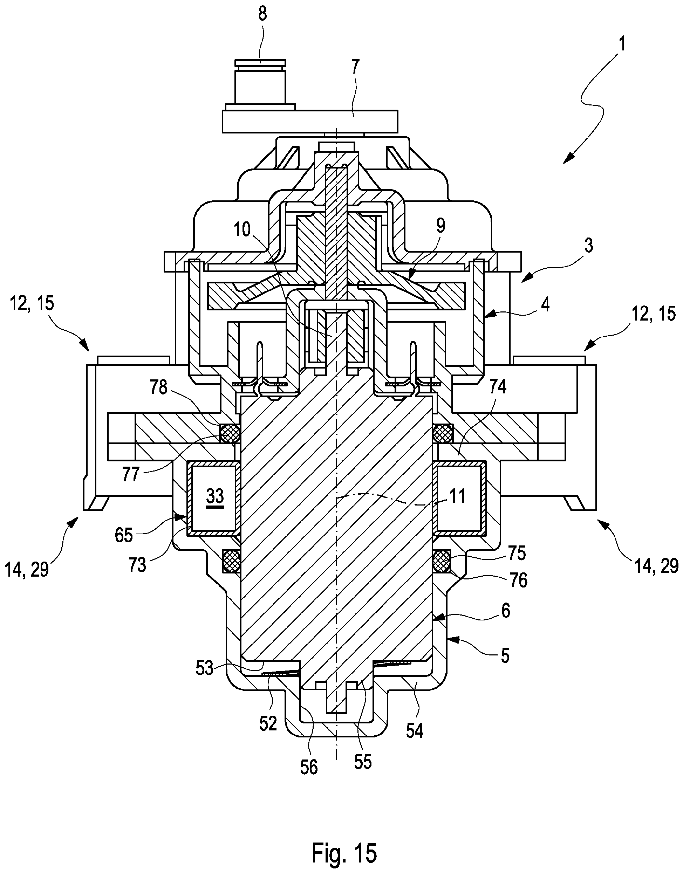

Bei der in den Fig. 15 bis 17 gezeigten Ausführungsform ist ebenfalls ein derartiger Einsatz 65 vorgesehen, der den Kühlmitteleinlassanschluss 34, den Kühlmittelauslassanschluss 35 und den Kühlkanal 33 umfasst. Hierbei sind die Anschlüsse 34, 35 für Einlass und Auslass des Kühlmittels durch Rohre bzw. Rohrstücke 71 und 72 gebildet, während der Kühlkanal 33 in einem C-förmigen Kanalkörper 73 ausgebildet ist, der die beiden Rohrkörper 71, 72 miteinander verbindet. Der Kanalkörper 73 liegt radial innen an der Außenseite des Elektromotors 6 unmittelbar an. Im bevorzugten Beispiel bildet der Kanalkörper 73 eine 180°-Umlenkung bzw. einen 180°-Bogen, der an seinen Enden gerade in die geradlinigen Rohrkörper 71, 72 übergeht. Der Kanalkörper 73 ist vorzugsweise kreisbogenförmig gekrümmt. Die Rohrkörper 71, 72 erstrecken sich somit parallel zueinander und ihr Abstand voneinander entspricht im Wesentlichen dem Innendurchmesser des Kanalkörpers 73. Der Einsatz 65 kann grundsätzlich wie im Beispiel der Fig. 14 in das zweite Gehäuseteil 5 axial oder radial eingesetzt sein. Bevorzugt ist jedoch bei diesem Beispiel, das auch bei der Ausführungsform der Fig. 14 realisierbar ist, dass das zweite Gehäuseteil 5 an diesen Einsatz 65 angespritzt ist. Im Beispiel der Fig. 15 ist die Formgebung des zweiten Gehäuseteils 5 so, dass der Einsatz 65 nicht darin einsetzbar ist. Z.B. verhindert ein radial nach innen ragender Kragen 74 des zweiten Gehäuseteils 5 ein axiales Einsetzen des Einsatzes 65.

Gemäß Fig. 15 kann an einer vom ersten Gehäuseteil 4 abgewandten Seite des Einsatzes 65 eine am Elektromotor 6 radial anliegende erste Dichtung 75 in einer ersten Ringnut 76 des zweiten Gehäuseteils 5 das zweite Gehäuseteil 5 gegenüber dem Elektromotor 6 abdichten. Außerdem ist hier eine zweite Dichtung 77 vorgesehen, die an einer dem ersten Gehäuseteil 4 zugewandten Seite des Einsatzes 65 am Elektromotor 6 radial anliegt und dabei den Elektromotor 6 gegenüber dem ersten Gehäuse 4 abdichtet. Die zweite Dichtung 77 ist dabei in eine Ringstufe 78 des ersten Gehäuseteils 4 eingesetzt.

Obwohl die sekundären Befestigungsstellen 14 nur in den Beispielen der Fig. 1 bis 8 erkennbar sind, ist klar, dass auch bei den Beispielen der Fig. 9 bis 17 derartige sekundäre Befestigungsstellen 14 vorgesehen sein können, die ebenfalls als Rastverbindungen 29 ausgestaltet sein können und die insbesondere in die primären Befestigungsstellen 12 integriert sein können, die zweckmäßig als Schraubverbindungen 15 ausgestaltet sind.

Gemäß den Fig. 10 und 13 ist im ersten Gehäuseteil 4 zumindest ein hitzeempfindliches elektrisches Bauteil 66 angeordnet. Bei diesem Bauteil 66 handelt es sich beispielsweise um einen Sensor zum Ermitteln der aktuellen Position bzw. Drehlage des Stellglieds 7. Beispielsweise kann dieser Sensor als berührungslos arbeitender Hall-Sensor ausgestaltet sein. Jedenfalls ist besagtes Bauteil 66 in den Beispielen der Fig. 10 und 13 in einem Kühlbereich 67 des ersten Gehäuseteils 4 angeordnet. Dieser Kühlbereich 67 befindet sich dabei in einem dem zweiten Gehäuseteil 5 zugewandten Bereich des ersten Gehäuseteils 4 und ist hier außerdem axial fluchtend zum Kühlkanal 33 angeordnet. Ferner ist dieser Kühlbereich 67 hier an einer vom zweiten Gehäuseteil 5 abgewandten Innenseite einer axialen Stirnwand 68 des ersten Gehäuseteils 4 angeordnet. Mit dieser Stirnwand 68 steht das erste Gehäuseteil 4 an einer dem zweiten Gehäuseteil 5 zugewandten Außenseite unmittelbar mit dem zweiten Gehäuseteil 5 in Kontakt. Beispielsweise bildet diese Stirnwand 68 den axialen Verschluss für den axial offenen Kühlkanal 33. Ferner liegen die Außendichtung 37 und die Innendichtung 38 axial an dieser Stirnwand 68 an.

## Patentansprüche

1. Stellvorrichtung zum mechanischen Betätigen einer Komponente einer Maschine (2),
- mit einem Gehäuse (3), das ein erstes Gehäuseteil (4) und ein zweites Gehäuseteil (5) aufweist,
- mit einem im Gehäuse (3) angeordneten Elektromotor (6) zum Antreiben eines außen am Gehäuse (3) angeordneten Stellglieds (7) zum Koppeln mit der zu betätigenden Komponente,
- mit einem im zweiten Gehäuseteil (5) ausgebildeten Kühlkanal (33) für ein flüssiges Kühlmittel, der mit einem außen am Gehäuse (3) vorgesehenen Kühlmitteleinlassanschluss (34) und mit einem außen am Gehäuse (3) vorgesehenen Kühlmittelauslassanschluss (35) fluidisch verbunden ist,
- wobei der Elektromotor (6) im zweiten Gehäuseteil (5) angeordnet ist und zumindest mit seiner Antriebswelle (10) axial in das erste Gehäuseteil (4) hineinragt, **dadurch gekennzeichnet,**
- **dass** die beiden Gehäuseteile (4, 5) aus Kunststoff hergestellt sind,
- **dass** ein den Kühlkanal (33), den Kühlmitteleinlassanschluss (34) und den Kühlmittelauslassanschluss (35) aufweisender Einsatz (65) vorgesehen ist, der in dem zweiten Gehäuseteil (5) angeordnet ist,
- **dass** der Kühlmitteleinlassanschluss (34) und der Kühlmittelauslassanschluss (35) durch das zweite Gehäuseteil (5) nach außen geführt sind.

2. Stellvorrichtung nach Anspruch 1,
**dadurch gekennzeichnet,**
**dass** der Kühlkanal (33) im zweiten Gehäuseteil (5) an einer dem ersten Gehäuseteil (4) zugewandten Seite axial offen ist und durch das erste Gehäuseteil (4) axial verschlossen ist.

3. Stellvorrichtung nach Anspruch 2,
**dadurch gekennzeichnet,**
**dass** an einer vom Elektromotor (6) abgewandten Seite des Kühlkanals (33) eine in Umfangsrichtung (13) geschlossen umlaufende Außendichtung (37) axial zwischen dem ersten Gehäuseteil (4) und dem zweiten Gehäuseteil (5) angeordnet ist.

4. Stellvorrichtung nach Anspruch 2 oder 3,
**dadurch gekennzeichnet,**
**dass** an einer dem Elektromotor (6) zugewandten Seite des Kühlkanals (33) eine in Umfangsrichtung (13) geschlossen umlaufende Innendichtung (38) axial zwischen dem ersten Gehäuseteil (4) und dem zweiten Gehäuseteil (5) angeordnet ist.

5. Stellvorrichtung nach einem der Ansprüche 1 bis 4,
**dadurch gekennzeichnet,**
**dass** der Kühlkanal (33) innerhalb des zweiten Gehäuseteils (5) an einer vom ersten Gehäuseteil (4) abgewandten Seite durch einen Kanalboden (51) axial begrenzt ist, der am zweiten Gehäuseteil (5) integral ausgeformt ist.

6. Stellvorrichtung nach einem der Ansprüche 1 bis 5,
**dadurch gekennzeichnet,**
**dass** der Kühlkanal (33) innerhalb des zweiten Gehäuseteils (5) vom Kühlmitteleinlassanschluss (34) in der Umfangsrichtung (13) zum Kühlmittelauslassanschluss (35) führt.

7. Stellvorrichtung nach einem der Ansprüche 1 bis 6,
**dadurch gekennzeichnet,**
**dass** der Kühlkanal (33) an einer dem ersten Gehäuseteil (4) zugewandten Axialseite eine sich in der Umfangsrichtung (13) erstreckende, axial offene Kanalöffnung (36) aufweist, die entlang ihrer gesamten Erstreckung in Umfangsrichtung (13) durch das erste Gehäuseteil (4) axial verschlossen ist.

8. Stellvorrichtung nach einem der Ansprüche 1 bis 7,
**dadurch gekennzeichnet,**
- **dass** das zweite Gehäuseteil (5) eine Außenschale (40) aus Metall und eine Innenschale (41) aus Metall aufweist,
**dass** die Innenschale (41) axial in die Außenschale (40) eingesetzt ist,
- **dass** der Kühlkanal (33) radial zwischen der Innenschale (41) und der Außenschale (40) ausgebildet ist,
- **dass** der Kühlmitteleinlassanschluss (34) und der Kühlmittelauslassanschluss (35) an der Außenschale (40) ausgebildet sind,
- **dass** der Elektromotor (6) axial in die Innenschale (41) eingesetzt ist.

9. Stellvorrichtung nach einem der Ansprüche 1 bis 8,
**dadurch gekennzeichnet,**
**dass** dieser Einsatz (65) durch besagte Innenschale (41) und Außenschale (40) gebildet ist.

10. Stellvorrichtung nach einem der Ansprüche 1 bis 9,
**dadurch gekennzeichnet,**
**dass** der Einsatz (65) in das zweite Gehäuseteil (5) eingesetzt ist.

11. Stellvorrichtung nach einem der Ansprüche 1 bis 9,
**dadurch gekennzeichnet,**
**dass** das zweite Gehäuseteil (5) an den Einsatz (65) angespritzt ist.

12. Stellvorrichtung nach einem der Ansprüche 1 bis 11,
**dadurch gekennzeichnet,**
- **dass** mehrere primäre Befestigungsstellen (12) zum Befestigen des Gehäuses (3) an der Maschine (2) vorgesehen sind,
- **dass** wenigstens eine sekundäre Befestigungsstelle (14) zum Befestigen des ersten Gehäuseteils (4) am zweiten Gehäuseteil (5) vorgesehen ist,
- **dass** die primären Befestigungsstellen (12), wenn damit das Gehäuse (3) an der Maschine (2) befestigt ist, zusätzlich zur wenigstens einen sekundären Befestigungsstelle (14) das erste Gehäuseteil (4) am zweiten Gehäuseteil (5) befestigen.

13. Stellvorrichtung nach Anspruch 12,
**dadurch gekennzeichnet,**
- **dass** die primären Befestigungsstellen (12) jeweils als Schraubverbindung (15) ausgestaltet sind, die jeweils eine Hülse (16) mit einer Durchgangsöffnung (17) zum Durchführen eines Schraubenschafts (18) aufweisen,
- **dass** die jeweilige Hülse (16) axial einenends einen Montageanschlag (19) aufweist und axial anderenends einen Schraubanschlag (20) aufweist,
- **dass** die jeweilige Hülse (16) axial geteilt ist und ein den Montageanschlag (19) aufweisendes, am ersten Gehäuseteil (4) ausgebildetes erstes Hülsenteil (25) und ein den Schraubanschlag (20) aufweisendes, am zweiten Gehäuseteil (5) ausgebildetes zweites Hülsenteil (26) aufweist,
- **dass** mehrere sekundäre Befestigungsstellen (14) vorgesehen sind, die jeweils als Rastverbindung (29) ausgestaltet sind, und
- **dass** die jeweilige Rastverbindung (29) einen am ersten Gehäuseteil (4) ausgebildeten, federnden Rasthaken (30) und eine am zweiten Gehäuseteil (5) ausgebildete Rastkontur (31) aufweist, die mit dem Rasthaken (30) zum Befestigen des ersten Gehäuseteils (4) am zweiten Gehäuseteil (5) zusammenwirkt.

14. Stellvorrichtung nach einem der Ansprüche 1 bis 13,
**dadurch gekennzeichnet,**
- **dass** im ersten Gehäuseteil (4) zumindest ein elektrisches Bauteil (66) in einem Kühlbereich (67) angeordnet ist,
- **dass** sich der Kühlbereich (67) in einem dem zweiten Gehäuseteil (5) zugewandten Bereich des ersten Gehäuseteils (4) und insbesondere axial fluchtend zum Kühlkanal (33) befindet, und
- **dass** sich der Kühlbereich (67) an einer vom zweiten Gehäuseteil (5) abgewandten Innenseite einer axialen Stirnwand (68) des ersten Gehäuseteils (4) befindet, die an ihrer dem zweiten Gehäuseteil (5) zugewandten Außenseite direkt mit dem zweiten Gehäuseteil (5) in Kontakt steht.

## Claims

1. Adjusting device for mechanically actuating a component of a machine (2),
- having a housing (3) which comprises a first housing part (4) and a second housing part (5),
- having an electric motor (6) arranged in the housing (3) for driving an actuator (7) arranged outside on the housing (3) for coupling to the component to be actuated,
- having a cooling channel (33) for a liquid coolant formed in the second housing part (5), which is fluidically connected to a coolant inlet port (34) provided outside on the housing (3) and to a coolant outlet port (35) provided outside on the housing (3),
- wherein the electric motor (6) is arranged in the second housing part (5) and projects axially into the first housing part (4) at least with its drive shaft (10), **characterised in that**
- the two housing parts (4, 5) are produced from plastic,
- an insert (65) comprising the cooling channel (33), the coolant inlet port (34) and the coolant outlet port (35) is provided, said insert being arranged in the second housing part (5),
- the coolant inlet port (34) and the coolant outlet port (35) are led outwards through the second housing part (5).

2. Adjusting device according to claim 1, **characterised in that** the cooling channel (33) in the second housing part (5) is axially open on a side facing towards the first housing part (4) and is axially closed by the first housing part (4).

3. Adjusting device according to claim 2, **characterised in that**, on a side of the cooling channel (33) facing away from the electric motor (6), a circumferential outer seal (37), closed in the peripheral direction (13), is arranged axially between the first housing part (4) and the second housing part (5).

4. Adjusting device according to claim 2 or 3, **characterised in that**, on a side of the cooling channel (33) facing towards the electric motor (6), a circumferential inner seal (38), closed in the peripheral direction (13), is arranged axially between the first housing part (4) and the second housing part (5).

5. Adjusting device according to any one of claims 1 to 4, **characterised in that** the cooling channel (33) is axially delimited by a channel base (51) within the second housing part (5) on a side facing away from the first housing part (4), said channel base being integrally formed on the second housing part (5).

6. Adjusting device according to any one of claims 1 to 5, **characterised in that** the cooling channel (33) leads from the coolant inlet port (34) in the peripheral direction (13) to the coolant outlet port (35), within the second housing part (5).

7. Adjusting device according to any one of claims 1 to 6, **characterised in that** the cooling channel (33) comprises an axially open channel opening (36) extending in the peripheral direction (13) on an axial side facing towards the first housing part (4), said channel opening being axially closed along its entire extension in the peripheral direction (13) by the first housing part (4).

8. Adjusting device according to any one of claims 1 to 7, **characterised in that**
- the second housing part (5) comprises an outer shell (40) made from metal and an inner shell (41) made from metal,
- the inner shell (41) is inserted axially into the outer shell (40),
- the cooling channel (33) is formed radially between the inner shell (41) and the outer shell (40),
- the coolant inlet port (34) and the coolant outlet port (35) are formed on the outer shell (40),
- the electric motor (6) is inserted axially into the inner shell (41).

9. Adjusting device according to any one of claims 1 to 8, **characterised in that** this insert (65) is formed by said inner shell (41) and outer shell (40).

10. Adjusting device according to any one of claims 1 to 9, **characterised in that** the insert (65) is inserted into the second housing part (5).

11. Adjusting device according to any one of claims 1 to 9, **characterised in that** the second housing part (5) is injection-moulded onto the insert (65).

12. Adjusting device according to any one of claims 1 to 11, **characterised in that**
- several primary fastening points (12) are provided for fastening the housing (3) to the machine (2),
- at least one secondary fastening point (14) is provided for fastening the first housing part (4) to the second housing part (5),
- the primary fastening points (12), if the housing (3) is thus fastened to the machine (2), fasten the first housing part (4) to the second housing part (5) in addition to the at least one secondary fastening point (14).

13. Adjusting device according to claim 12, **characterised in that**
- the primary fastening points (12) are each designed as a screw connection (15), which each comprise a sleeve (16) having a passage opening (17) for implementing a screw shaft (18),
- the respective sleeve (16) comprises an assembly stop (19) axially at one end and comprises a screw stop (20) axially at the other end,
- the respective sleeve (16) is axially divided and comprises a first sleeve part (25) comprising the assembly stop (19) and formed on the first housing part (4) and a second sleeve part (26) comprising the screw stop (20) and formed on the second housing part (5),
- several secondary fastening points (14) are provided which are each designed as a latch connection (29), and
- the respective latch connection (29) comprises a flexible latch hook (30) formed on the first housing part (4) and a latch contour (31) formed on the second housing part (5), said latch contour interacting with the latch hook (30) for fastening the first housing part (4) to the second housing part (5).

14. Adjusting device according to any one of claims 1 to 13, **characterised in that**
- in the first housing part (4), at least one electrical component (66) is arranged in a cooling region (67),
- the cooling region (67) is located in a region of the first housing part (4) facing towards the second housing part (5) and in particular axially aligned with respect to the cooling channel (33), and
- the cooling region (67) is located on an inner side of an axial front wall (68) of the first housing part (4) facing away from the second housing part (5), said inner side being directly in contact with the second housing part (5) on its outer side facing towards the second housing part (5).

## Revendications

1. Dispositif de réglage pour l'actionnement mécanique d'un composant d'une machine (2),
- avec un boîtier (3), qui présente une première partie de boîtier (4) et une seconde partie de boîtier (5),
- avec un moteur électrique (6), disposé dans le boîtier (3), destiné à entraîner un organe de réglage (7), disposé à l'extérieur sur le boîtier (3), destiné à être couplé au composant à actionner,
- avec un canal de refroidissement (33) réalisé dans la seconde partie de boîtier (5) pour un réfrigérant liquide, qui est en liaison fluidique avec un raccord d'entrée de réfrigérant (34) prévu à l'extérieur sur le boîtier (3) et avec un raccord de sortie de réfrigérant (35) prévu à l'extérieur sur le boîtier (3),
- dans lequel le moteur électrique (6) est disposé dans la seconde partie de boîtier (5) et fait saillie axialement dans la première partie de boîtier (4) au moins avec son arbre d'entraînement (10),
**caractérisé en ce**
- **que** les deux parties de boîtier (4, 5) sont fabriquées en matière plastique,
- **qu'**un insert (65) présentant le canal de refroidissement (33), le raccord d'entrée de réfrigérant (34) et le raccord de sortie de réfrigérant (35) est prévu, qui est disposé dans la seconde partie de boîtier (5),
- **que** le raccord d'entrée de réfrigérant (34) et le raccord de sortie de réfrigérant (35) sont guidés vers l'extérieur à travers la seconde partie de boîtier (5).

2. Dispositif de réglage selon la revendication 1,
**caractérisé en ce**
**que** le canal de refroidissement (33) est ouvert axialement dans la seconde partie de boîtier (5) sur une face tournée vers la première partie de boîtier (4) et fermé axialement par la première partie de boîtier (4).

3. Dispositif de réglage selon la revendication 2,
**caractérisé en ce**
**qu'**un joint d'étanchéité extérieur (37) périphérique fermé dans la direction périphérique (13) est disposé axialement entre la première partie de boîtier (4) et la seconde partie de boîtier (5) sur une face du canal de refroidissement (33) opposée au moteur électrique (6).

4. Dispositif de réglage selon la revendication 2 ou 3,
**caractérisé en ce**
**qu'**un joint d'étanchéité intérieur (38) périphérique fermé dans la direction périphérique (13) est disposé axialement entre la première partie de boîtier (4) et la seconde partie de boîtier (5) sur une face du canal de refroidissement (33) tournée vers le moteur électrique (6).

5. Dispositif de réglage selon l'une quelconque des revendications 1 à 4,
**caractérisé en ce**
**que** le canal de refroidissement (33) est délimité axialement à l'intérieur de la seconde partie de boîtier (5) sur une face opposée à la première partie de boîtier (4) par un fond de canal (51), qui est formé d'une seule pièce sur la seconde partie de boîtier (5).

6. Dispositif de réglage selon l'une quelconque des revendications 1 à 5,
**caractérisé en ce**
**que** le canal de refroidissement (33), à l'intérieur de la seconde partie de boîtier (5), va du raccord d'entrée de réfrigérant (34) dans la direction périphérique (13) au raccord de sortie de réfrigérant (35).

7. Dispositif de réglage selon l'une quelconque des revendications 1 à 6,
**caractérisé en ce**
**que** le canal de refroidissement (33) présente sur une face axiale tournée vers la première partie de boîtier (4) une ouverture de canal (36) ouverte axialement, s'étendant dans la direction périphérique (13), qui est fermée axialement par la première partie de boîtier (4) dans la direction périphérique (13) le long de toute son étendue.

8. Dispositif de réglage selon l'une quelconque des revendications 1 à 7,
**caractérisé en ce**
- **que** la seconde partie de boîtier (5) présente une coque extérieure (40) en métal et une coque intérieure (41) en métal,
- **que** la coque intérieure (41) est insérée axialement dans la coque extérieure (40),
- **que** le canal de refroidissement (33) est réalisé radialement entre la coque intérieure (41) et la coque extérieure (40),
- **que** le raccord d'entrée de réfrigérant (34) et le raccord de sortie de réfrigérant (35) sont réalisés sur la coque extérieure (40),
- **que** le moteur électrique (6) est inséré axialement dans la coque intérieure (41).

9. Dispositif de réglage selon l'une quelconque des revendications 1 à 8,
**caractérisé en ce**
**que** ledit insert (65) est constitué desdites coque intérieure (41) et coque extérieure (40).

10. Dispositif de réglage selon l'une quelconque des revendications 1 à 9,
**caractérisé en ce**
**que** l'insert (65) est inséré dans la seconde partie de boîtier (5).

11. Dispositif de réglage selon l'une quelconque des revendications 1 à 9,
**caractérisé en ce**
**que** la seconde partie de boîtier (5) est injectée directement sur l'insert (65).

12. Dispositif de réglage selon l'une quelconque des revendications 1 à 11, **caractérisé en ce**
- **que** plusieurs points de fixation primaires (12) destinés à fixer le boîtier (3) sur la machine (2) sont prévus,
- **qu'**au moins un point de fixation secondaire (14) destiné à fixer la première partie de boîtier (4) sur la seconde partie de boîtier (5) est prévu,
- **que** les points de fixation primaires (12), lorsque le boîtier (3) est ainsi fixé sur la machine (2), fixent, en plus de l'au moins un point de fixation secondaire (14), la première partie de boîtier (4) sur la seconde partie de boîtier (5).

13. Dispositif de réglage selon la revendication 12,
**caractérisé en ce**
- **que** les points de fixation primaires (12) sont réalisés respectivement en tant que liaison vissée (15), qui présentent respectivement une douille (16) avec une ouverture de passage (17) pour le passage d'une tige de vis (18),
- **que** la douille (16) respective présente axialement à une extrémité une butée de montage (19) et axialement à l'autre extrémité une butée de vis (20),
- **que** la douille (16) respective est divisée axialement et présente une première partie de douille (25), présentant la butée de montage (19), réalisée sur la première partie de boîtier (4), et une seconde partie de douille (26), présentant la butée de vis (20), réalisée sur la seconde partie de boîtier (5),
- **que** plusieurs points de fixation secondaires (14) sont prévus, qui sont réalisés respectivement en tant que liaison par encliquetage (29), et
- **que** la liaison par encliquetage (29) respective présente un crochet d'encliquetage (30) à ressorts, réalisé sur la première partie de boîtier (4), et un contour d'encliquetage (31), réalisé sur la seconde partie de boîtier (5), qui coopère avec le crochet d'encliquetage (30) pour la fixation de la première partie de boîtier (4) sur la seconde partie de boîtier (5).

14. Dispositif de réglage selon l'une quelconque des revendications 1 à 13, **caractérisé en ce**
- **que**, dans la première partie de boîtier (4), au moins un composant électrique (66) est disposé dans une zone de refroidissement (67),
- **que** la zone de refroidissement (67) se trouve dans une zone, tournée vers la seconde partie de boîtier (5), de la première partie de boîtier (4) et en particulier axialement en affleurement avec le canal de refroidissement (33), et
- **que** la zone de refroidissement (67) se trouve sur une face intérieure, opposée à la seconde partie de boîtier (5), d'une paroi frontale axiale (68), de la première partie de boîtier (4), qui est directement en contact avec la seconde partie de boîtier (5) sur sa face extérieure tournée vers la seconde partie de boîtier (5).
